(19) Europäisches Patentamt
European Patent Office
Office européen des brevets

(11) **EP 4 592 370 A1**

(12) **EUROPÄISCHE PATENTANMELDUNG**

(43) Veröffentlichungstag:
**30.07.2025   Patentblatt 2025/31**

(21) Anmeldenummer: **24154545.8**

(22) Anmeldetag: **29.01.2024**

(51) Internationale Patentklassifikation (IPC):
**C09J 5/00** (2006.01)        **C09J 7/22** (2018.01)
**C09J 7/29** (2018.01)        **C09J 7/30** (2018.01)

(52) Gemeinsame Patentklassifikation (CPC):
**C09J 7/22; C09J 5/00; C09J 7/29; C09J 7/30;**
C08K 2201/001; C09J 2203/326; C09J 2203/354;
C09J 2301/314; C09J 2301/408; C09J 2301/502;
C09J 2400/163; C09J 2433/00

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **TESA SE**
**22848 Norderstedt (DE)**

(72) Erfinder:
• **KRAWINKEL, Thorsten**
**22848 Norderstedt (DE)**

• **BLANK, Carsten**
**22848 Norderstedt (DE)**
• **KEITE-TELGENBÜSCHER, Klaus**
**22848 Norderstedt (DE)**
• **ESCUDERO VALLEJO, Aranzazu**
**22848 Norderstedt (DE)**
• **WANG, Shuang**
**22848 Norderstedt (DE)**

(74) Vertreter: **tesa SE**
**Hugo-Kirchberg-Straße 1**
**22848 Norderstedt (DE)**

(54) **KLEBEBAND, VERKLEBTER VERBUND UND VERFAHREN ZUM ELEKTRISCHEN LÖSEN DES VERKLEBTEN VERBUNDES**

(57)    Die Erfindung betrifft ein Klebeband, ein Verfahren zur Herstellung des Klebebandes, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Das Klebeband umfasst wenigstens folgende Schichten:
• Eine erste Klebemasseschicht D, wobei die Klebemasseschicht D wenigstens ein Elektrolyt enthält; und

• Eine zweite Klebemasseschicht C; und
• Eine elektrisch leitfähige Trägerschicht T, die zwischen den Schichten D und C angeordnet ist, wobei die elektrisch leitfähige Trägerschicht eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-%, bevorzugt zu mindestens 80 Gew.-%, besonders bevorzugt zu mindestens 90 Gew.-%, ausgewählt ist aus der Gruppe bestehend aus Zinn, Chrom, Nickel, Titan und Eisen.

Fig. 1

EP 4 592 370 A1

**EP 4 592 370 A1**

**Beschreibung**

Die Erfindung betrifft ein Klebeband, ein Verfahren zur Herstellung des Klebebandes, einen verklebten Verbund, ein Verfahren zum elektrischen Lösen des verklebten Verbundes und die Verwendung des Klebebands zur Verklebung von Bauteilen in elektronischen Geräten, Automobilen, medizinischen Geräten und zahnmedizinischen Geräten.

Die meisten Klebebandlösungen sind nicht oder nicht ohne Beschädigung der Substrate ablösbar. Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3363873 B1 ein solches elektrisches Trennverfahren bzw. ein entsprechendes doppelseitiges Klebeband, welches eine elektrische Trennung von miteinander verklebten Substraten ermöglicht. Hierdurch soll insbesondere die Trennung von rigiden Substraten ermöglicht werden. Das in der EP 3363873 B1 vorgeschlagene Klebeband weist hierzu eine mittig angeordnete elektrisch leitfähige Schicht umgeben von zwei Klebemasseschichten auf, von denen eine Klebeschicht ein Elektrolyt enthält und hierdurch elektrisch von der leitfähigen Schicht oder einem elektrisch leitfähigen Substrat gelöst werden kann. Die elektrisch leitfähige Trägerschicht ist hierbei aus einer leitfähigen Schicht und einer stützenden Trägerschicht aufgebaut.

Die verwendeten Trägerschichten neigen allerdings dazu, unter Feucht-Wärme-Lagerung eine Korrosion zu zeigen, die zum einen optische Defekte erkennen lässt, bei längerer Korrosion aber auch die Ablösbarkeit einschränkt.

Der vorliegenden Erfindung liegt daher die Aufgabe zugrunde ausgehend vom Stand der Technik ein Klebeband und ein Verfahren zur Herstellung des Klebebandes bereitzustellen, wobei sich das Klebeband von wenigstens einem Substrat ohne Rückstände wieder ablösen lassen soll und korrosionsbeständiger sein soll als entsprechende ablösbare Klebebänder aus dem Stand der Technik.

Die Aufgabe wird erfindungsgemäß durch das Klebeband gemäß Anspruch 1 gelöst.

Das erfindungsgemäße Klebeband umfasst wenigstens folgende Schichten:

- Eine erste Klebemasseschicht D, wobei die Klebemasseschicht D wenigstens ein Elektrolyt enthält; und

- Eine zweite Klebemasseschicht C; und

- Eine elektrisch leitfähige Trägerschicht T, die zwischen den Schichten D und C angeordnet ist, wobei die elektrisch leitfähige Trägerschicht eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-% ausgewählt ist aus der Gruppe bestehend aus Zinn, Chrom, Nickel, Titan und Eisen.

Dadurch, dass das Klebeband die erste Klebemasseschicht enthaltend wenigstens einen Elektrolyten umfasst, ist es elektrisch wieder ablösbar.

Dadurch, dass die Trägerschicht T elektrisch leitfähig ist, ist es möglich, eine Spannung hieran anzulegen, um das Klebeband über die erste Klebemasseschicht D von dem Substrat zu lösen.

Durch die Kombination der ablösbaren Klebemasseschicht D und der leitfähigen Schichten T ist es somit möglich, das Klebeband adhäsiv von wenigstens einem Substrat abzulösen. Dies hat den Vorteil, dass keine Rückstände des Klebebandes an ebendiesem Substrat verbleiben. Dadurch, dass die elektrisch leitfähige Metallschicht auf der Polymerfolie mit 70 Gew.-% überwiegend wenigstens ein Metall aus der Gruppe Zinn, Chrom, Nickel, Titan und Eisen umfasst, ist das Klebeband auch unter Feucht-Wärme-Bedingungen korrosionsstabil. Es kommt insbesondere nicht zu einer Verschlechterung der Ablösbarkeit oder zu optischen Defekten der Metallschicht.

Unter dem Ausdruck "feucht-warme Bedingungen" oder "Feucht-Wärme-Bedingungen" werden im Rahmen der vorliegenden Erfindung insbesondere Bedingungen verstanden, die eine relative Luftfeuchtigkeit von mehr als 60 % und eine Umgebungstemperatur von mehr als 25 °C umfassen.

Eine "Lagerung" unter feucht-warmen Bedingungen bedeutet insbesondere, dass die betrachteten Materialien oder Artikel für eine Dauer von mehr als einem Tag unter feucht-warmen Bedingungen gelagert werden. Besonders aussagekräftig sind in diesem Zusammenhang lange Lagerungszeiten, wie insbesondere mehr als 100 Stunden, beispielsweise 500 oder 1000 Stunden.

Im Rahmen der vorliegenden Erfindung wird als standardisiertes feucht-warmes Umgebungsklima insbesondere eine Temperatur von 60 °C und eine relative Luftfeuchtigkeit von 95 % für die Versuche herangezogen.

Das erfindungsgemäße Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Stanzlingen erhalten wird.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise exakt gleich.

Die Ausführungen gelten analog für den Träger, der als integraler Bestandteil des Klebebandes eine Schicht in x- und y-Richtung ausbildet.

Es versteht sich, dass die einzelnen Schichten entlang der z-Richtung aufeinander angeordnet sind.

Sämtliche Ausführungen der Beschreibung gelten für das erfindungsgemäße Klebeband, das erfindungsgemäße Verfahren zur Herstellung des Klebebandes, den erfindungsgemäßen verklebten Verbund sowie das Verfahren zum elektrischen Lösen des Verbundes und die Verwendung des erfindungsgemäßen Klebebandes.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Die Klebemasseschicht D enthält wenigstens ein Elektrolyt.

Unter einem "Elektrolyt" wird vorliegend eine chemische Verbindung verstanden, "die im festen, flüssigen oder gelösten Zustand in Ionen dissoziiert ist und die sich unter dem Einfluss eines elektrischen Feldes gerichtet bewegt", wie unter dem Wikipedia-Eintrag "Elektrolyt" vom 04.01.2023 bzw. entsprechend in Carl H. Hamann, Wolf Vielstich: Elektrochemie I: Elektrolytische Leitfähigkeit, Potentiale, Phasengrenzen. 2. Auflage. VCH Verlagsgesellschaft mbH, Oldenburg/ Bonn 1985, ISBN 3-527-21100-4, S. 4., aufgeführt.

Bevorzugt ist der Elektrolyt der Klebemasseschicht D ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten.

Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind im Rahmen der vorliegenden Erfindung Salze, die bei Raumtemperatur, also 23 °C, flüssig sind. Ionische Flüssigkeiten enthalten dementsprechend Anionen und Kationen.

Ionische Flüssigkeiten sind daher als Elektrolyt im Rahmen des erfindungsgemäßen Trennverfahrens bzw. Verfahrens zum elektrischen Lösen besonders gut geeignet.

Wenn eine Spannung angelegt wird, wandern die Anionen zur anodischen Seite und die Kationen zur kathodischen Seite. Hierdurch kommt es zu einer Absenkung der Klebkraft der die ionische Flüssigkeit enthaltenden Klebemasseschicht, hier Schicht D, vom Substrat, vorliegend insbesondere Substrat A, wodurch eine adhäsive Spaltung zwischen der Klebemasseschicht D und dem Substrat A erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasseschicht D zwei oder mehrere verschiedene ionische Flüssigkeiten zugegeben werden bzw. die Klebemasseschicht D dann zwei oder mehrere verschiedene ionische Flüssigkeiten enthält.

Bevorzugt ist das Anion der ionischen Flüssigkeit ausgewählt aus der Gruppe bestehend aus $Br^-$, $AlCl_4^-$, $Al_2Cl_7^-$, $NO_3$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $ASF_6^-$, $SbF_6^-$, $CF_3(CF_2)_3SO_3^-$ $(CF_3CF_2SO_2)_2N^-$, $CF_3CF_2CF_2COO^-$, $(FSO_2)_2N^-$, Diese Anionen sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Besonders bevorzugt ist das Anion ausgewählt aus der Gruppe bestehend aus $(CF_3SO_2)_2N^-$, $(FSO_2)_2N^-$ und $PF_6^-$.

Diese Anionen sind besonders gut geeignet, da hiermit die beste elektrische Ablösbarkeit erzielt wird. Insbesondere gelingt das (Wieder-)Ablösen mit diesen Anionen besonders schnell und es verbleiben keine Rückstände.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis.

Diese Kationen sind besonders gut in Polymeren löslich, die in Klebemassen verwendet werden, wie (Meth) Acrylaten, und können schnell genug durch die Matrix diffundieren, um ein vergleichsweise schnelles Trennverfahren zu ermöglichen. Gleichzeitig verbleiben keine Rückstände.

Besonders bevorzugt ist das Kation ausgewählt aus der Gruppe bestehend aus Kationen auf Imidazolium-Basis.

Diese Kationen sind besonders gut geeignet, da hiermit die beste elektrische Ablösbarkeit erzielt wird. Insbesondere gelingt das (Wieder-)Ablösen mit diesen Kationen besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium. Wiederum bevorzugt ist das Kation 1-Ethyl-3-methylimidazolium.

Besonders bevorzugt ist der Elektrolyt der Klebemasseschicht D ausgewählt aus der Gruppe bestehend aus den ionischen Flüssigkeiten

1-Ethyl-3-methylimidazolium-bis(trifluormethylsulfonyl)imid (EMIM-TFSI),
1-Ethyl-3-methylimidazolium bis(fluorsulfonyl)imid (EMIM-FSI),
1-Ethyl-3-methylimidazolium-hexafluorophosphat, und
1-Butyl-3-methylimidazolium-hexafluorophosphat.

Diese ionischen Flüssigkeiten sind besonders gut in Polymeren löslich, die in Klebemassen verwendet werden, wie (Meth)Acrylaten, und können schnell genug durch die Matrix diffundieren, um ein vergleichsweise schnelles Trennverfahren zu ermöglichen. Gleichzeitig verbleiben keine Rückstände.

Bei der Masse der ersten Klebemasseschicht D kann es sich prinzipiell um jegliche dem Fachmann bekannte Klebemasse handeln.

Dabei kann die Masse der ersten Klebemasseschicht D eine Haftklebemasse und/oder eine wärmeaktiviert aushärtbare oder eine bei Raumtemperatur aushärtbare Klebemasse sein.

Die Masse der ersten Klebemasseschicht D enthält bevorzugt wenigstens ein Polymer.

Besonders bevorzugt ist es, dass die erste Klebemasseschicht D poly(meth)acrylat-basiert ist. Unter dem Ausdruck "(meth)acrylat-basiert" ist im Rahmen der vorliegenden Erfindung zu verstehen, dass Poly(meth)acrylate die Hauptpolymere der Klebemasse darstellen und dementsprechend zu 90 bis 100 Gew.-% in der Klebemasseschicht D enthalten sind, dabei bezogen auf 100 Gew.-%, also bezogen auf die Gesamtmenge an in der Klebemasseschicht D enthaltenen Polymeren. Etwaige in der Klebemasseschicht D enthaltenen Klebharze werden nicht zu den 100 Gew.-% an enthaltenen Polymeren gezählt.

Sofern die Klebemasseschicht weniger als 100 Gew.-% (bezogen auf die Gesamtmenge an enthaltenen Polymeren) an Poly(meth)acrylaten enthält, enthält sie wenigstens einen Typen an weiteren Polymeren.

Weitere in der Klebemasseschicht D enthaltene Polymere können insbesondere ausgewählt sein aus natürlichen und synthetischen Polymeren, wie insbesondere Naturkautschuk und Synthesekautschuk.

Besonders bevorzugt sind die in der Klebemasseschicht D enthaltenen Polymere zu 100 Gew.-% Poly(meth) acrylate.

Bei den Poly(meth)acrylaten sämtlicher Ausführungsformen kann es sich prinzipiell um jegliche Poly(meth) acrylate handeln, die für die Verwendung in Klebemassen geeignet sind.

Unter einem "Poly(meth)acrylat" wird ein Polymer verstanden, welches insbesondere durch radikalische oder anionische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Bevorzugt enthält das Poly(meth)acrylat zumindest anteilig einpolymerisierte funktionelle Monomere, besonders bevorzugt Monomere wenigstens einer Sorte mit wenigstens einer funktionellen Gruppe, die ausgewählt ist aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen.

Die genannten Gruppen mit Ausnahme von Epoxidgruppen weisen eine Reaktivität mit Epoxidgruppen auf, wodurch das Poly(meth)acrylat vorteilhaft einer thermischen Vernetzung mit eingebrachten Epoxiden zugänglich wird.

Ganz besonders bevorzugt enthält das Poly(meth)acrylat zumindest anteilig einpolymerisierte funktionelle Monomere, besonders bevorzugt Monomere wenigstens einer Sorte mit wenigstens einer funktionellen Gruppe, die ausgewählt ist aus der Gruppe bestehend aus Carbonsäuregruppen, und Epoxidgruppen; insbesondere enthält es mindestens eine Carbonsäuregruppe.

Gemäß besonders vorteilhafter Ausführungsformen enthält das Poly(meth)acrylat anteilig einpolymerisierte Acrylsäure und/oder Methacrylsäure. Hierdurch weist das Poly(meth)acrylat aufgrund der Carbonsäuregruppen eine Reaktivität mit Epoxidgruppen auf, wodurch das Poly(meth)acrylat vorteilhaft einer thermischen Vernetzung mit eingebrachten Epoxiden zugänglich wird.

Das Poly(meth)acrylat kann bevorzugt auf die folgende Monomerzusammensetzung zurückgeführt werden:

a) mindestens ein Acrylsäureester und/oder Methacrylsäureester der folgenden Formel (1)

$$(1) \qquad CH_2=C(R^I)(COOR^{II}),$$

worin $R^I$ = H oder $CH_3$ und R" ein Alkylrest mit 4 bis 18 C-Atomen ist;

b) mindestens ein olefinisch ungesättigtes Monomer mit mindestens einer funktionellen Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen;

c) optional weitere Acrylsäureester und/oder Methacrylsäureester und/oder olefinisch ungesättigte Monomere, die mit der Komponente (a) copolymerisierbar sind.

Gemäß einer besonders vorteilhaften Ausführungsform basiert das Poly(meth)acrylat auf einer Monomerzusammensetzung, die Monomere der Gruppe a) mit einem Anteil von 93 bis 99 Gew.-% und Monomere der Gruppe b) mit einem Anteil von 1 bis 7 Gew.-% enthält.

Mit einem derartigen Poly(meth)acrylat in der Klebemasseschicht D des erfindungsgemäßen Klebebandes wird ein besonders gutes Eigenschaftsprofil umfassend die Klebrigkeit, die Schockbeständigkeit sowie die rückstandsfreie Ablösbarkeit erzielt.

Die Monomere der Komponente a) sind allgemein weichmachende, eher unpolare Monomere. Besonders bevorzugt ist R" in den Monomeren a) ein Alkylrest mit 4 bis 10 C-Atomen. Die Monomere der Formel (1) sind insbesondere ausgewählt aus der Gruppe bestehend aus n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat, 2-Ethylhexylmethacrylat, 2-Propylheptylacrylat und 2-Propylheptylmethacrylat.

Besonders bevorzugt sind die Monomere der Formel (1) bzw. der Gruppe a) ausgewählt aus der Gruppe bestehend aus n-Butylacrylat, n-Hexylacrylat, n-Octylacrylat, Isooctylacrylat, 2-Ethylhexylacrylat und 2-Propylheptylacrylat.

Die genannten Monomere lassen sich besonders gut polymerisieren und die Glasübergangstemperatur des hergestellten Poly(meth)acrylates besonders gut einstellen. Hierdurch können wiederum optimierte Eigenschaften im Hinblick auf die Fließfähigkeit und Klebrigkeit erzielt werden, welche auch an das jeweilige zu verklebende Substrat bzw. Bauteil angepasst sind.

Dabei sind die Monomere der Formel (1) bzw. der Gruppe a) wiederum bevorzugt ausgewählt aus der Gruppe bestehend aus n-Butylacrylat, Isooctylacrylat und 2-Ethylhexylacrylat.

Ganz besonders bevorzugt werden als Monomere der Formel (1) bzw. der Gruppe a) n-Butylacrylat und 2-Ethylhexylacrylat verwendet.

Die Monomere der Gruppe b) sind besonders bevorzugt ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, 2-Hydroxyethylacrylat, Hydroxypropylacrylat, 3-Hydroxypropylacrylat, Hydroxybutylacrylat, 4-Hydroxybutylacrylat, Hydroxyhexylacrylat, 6-Hydroxyhexylacrylat, Hydroxyethylmethacrylat, 2-Hydroxyethylmethacrylat, Hydroxypropylmethacrylat, 3-Hydroxypropylmethacrylat, Hydroxybutylmethacrylat, 4-Hydroxybutylmethacrylat, Hydroxyhexylmethacrylat, 6-Hydroxyhexylmethacrylat, Allylalkohol, Glycidylacrylat, Glycidylmethacrylat.

Bevorzugt sind die Monomere der Gruppe b) ausgewählt aus Acrylsäure, Methacrylsäure und Hydroxyethylacrylat.

Ganz besonders bevorzugt wird als Monomere der Gruppe b) Acrylsäure verwendet.

Beispielhafte Monomere der Komponente c) sind:

Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxypolyethylenglykolmethacrylat 350, Methoxypolyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat,

2,2,2-Trifluorethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid; N,N-Dialkyl-substituierte Amide wie beispielsweise N,N-Dimethylacrylamid und N,N-Dimethylmethacrylamid; N-Benzylacrylamid, N-Isopropylacrylamid, N-tert-Butylacrylamid, N-tert-Octylacrylamid, N-Methylolacrylamid, N-Methylolmethacrylamid, Acrylnitril, Methacrylnitril; Vinylether wie Vinylmethylether, Ethylvinylether, Vinylisobutylether; Vinylester wie Vinylacetat; Vinylhalogenide, Vinylidenhalogenide, Vinylpyridin, 4-Vinylpyridin, N-Vinylphthalimid, N-Vinyllactam, N-Vinylpyrrolidon, Styrol, $\alpha$- und p-Methylstyrol, $\alpha$-Butylstyrol, 4-n-Butylstyrol, 4-n-Decylstyrol, 3,4-Dimethoxystyrol; Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente c) können vorteilhaft auch derart gewählt werden, dass sie funktionelle Gruppen enthalten, die eine nachfolgende strahlenchemische Vernetzung (beispielsweise durch Elektronenstrahlen oder UV-Strahlung) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Bevorzugt handelt es sich bei dem Poly(meth)acrylat um ein Polyacrylat, welches durch Polymerisation von n-Butylacrylat und/oder n-Hexylacrylat und/oder n-Octylacrylat und/oder Isooctylacrylat und/oder 2-Ethylhexylacrylat und/oder 2-Propylheptylacrylat und Acrylsäure hergestellt ist.

Besonders bevorzugt handelt es sich bei dem Poly(meth)acrylat um ein Polyacrylat, welches durch Polymerisation von n-Butylacrylat, 2-Ethylhexylacrylat und Acrylsäure hergestellt ist.

Hierdurch ergibt sich eine besonders hohe Klebkraft der Klebemasseschicht D. Somit weist auch das erfindungsgemäße Klebeband eine besonders hohe Klebkraft auf, insbesondere wenn das Klebeband über wenigstens eine Fläche der Klebemasseschicht D verklebt wird.

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Bis-(4-tert-butylcyclohexyl)peroxydicarbonat, Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont).

Gemäß bevorzugter Ausführungsformen wird Bis-(4-tert-butylcyclohexyl)peroxydicarbonat verwendet.

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Nach der Herstellung der Poly(meth)acrylate können diese sowohl aus Lösung weiterverarbeitet werden, oder es erfolgt eine Aufkonzentration, und die weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte (Gewichtsmittel der Molekulargewichtsverteilung) Mw des oder der Poly(meth)acrylate liegen bevorzugt in einem Bereich von 20.000 bis 2.000.000 g/mol, besonders bevorzugt in einem Bereich von 100.000 bis 1.500.000 g/mol, ganz besonders bevorzugt in einem Bereich von 150.000 bis 1.000.000 g/mol. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Mit einem derartigen Mw inklusive sämtlicher Bevorzugungsstufen des oder der Poly(meth)acrylate wird eine ausreichende Kohäsion bei gleichzeitig guter Fließfähigkeit und guter Adhäsion der Klebemasse erzielt, wobei es sich versteht, dass die Klebemasse hinsichtlich des Eigenschaftsprofils der genannten Eigenschaften bei höherer Bevorzugungsstufe in einem höheren Maß optimiert ist.

Die Bestimmung des Mw erfolgt gemäß GPC wie unter den Prüfmethoden beschrieben.

Die Poly(meth)acrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität von Polymeren.

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden ($K = 1000 k$).

Bevorzugt weist das Poly(meth)acrylat eine Polydispersität PD < 4 und somit eine relativ enge Molekulargewichtsverteilung auf. Darauf basierende Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Ferner lässt sich in vorteilhafter Weise die Atom Transfer Radical Polymerization (ATRP) zur Synthese eng verteilter Poly(meth)acrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden. Auch RAFT-Polymerisation ist geeignet.

Die Poly(meth)acrylate sind bevorzugt durch Verknüpfungsreaktionen - insbesondere im Sinne von Additions- oder Substitutionsreaktionen - von in ihnen enthaltenen funktionellen Gruppen, wie insbesondere Carbonsäuregruppen, mit thermischen Vernetzern vernetzt. Hierdurch ergibt sich der Vorteil, dass die Klebemasse nicht zu weich ist und einen nicht zu hohen Kaltfluss aufweist. Dies wirkt sich vorteilhaft auf die Kohäsion der Klebemasse sowie die Lagerung und Verarbeitbarkeit der Klebemasse aus.

Es können alle thermischen Vernetzer verwendet werden, die

- sowohl eine ausreichend lange Verarbeitungszeit gewährleisten, sodass es nicht zu einer Vergelung während des Verarbeitungsprozesses, insbesondere des Extrusionsprozesses, kommt,

- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen.

Möglich ist beispielsweise eine Kombination aus Carboxy- (Carbonsäure-), Amino- und/oder Hydroxygruppen enthaltenden Polymeren und Isocyanaten, insbesondere aliphatischen oder blockierten Isocyanaten, beispielsweise mit Aminen deaktivierten trimerisierten Isocyanaten, als Vernetzer. Geeignete Isocyanate sind insbesondere trimerisierte Derivate von MDI [4,4-Methylendi(phenylisocyanat)], HDI [Hexamethylendiisocyanat, 1,6-Hexylendiisocyanat] und IPDI [Isophorondiisocyanat, 5-Isocyanato-1-isocyanatomethyl-1,3,3-trimethylcyclohexan].

Bevorzugt werden thermische Vernetzer zu 0,1 bis 5 Gew.-%, insbesondere zu 0,2 bis 1 Gew.- %, bezogen auf die Gesamtmenge des zu vernetzenden Polymers, eingesetzt.

Auch eine Vernetzung über Komplexbildner, auch als Chelate bezeichnet, ist möglich. Ein bevorzugter Komplexbildner ist beispielsweise Aluminiumacetylacetonat.

Bevorzugt sind die Poly(meth)acrylate mittels Epoxid(en) bzw. mittels einer oder mehrerer epoxidgruppenhaltiger Substanz(en) vernetzt. Hierdurch wird eine dauerhafte, nichtreversible, Vernetzung sichergestellt.

Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole, insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche; Epoxyether mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl) propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether; Phenol-Formaldehyd-Kondensationsprodukte wie Phenolalkohole und Phenolaldehydharze; S- und N-haltige Epoxide, zum Beispiel N,N-Diglycidylanilin, N,N'-Dimethyldiglycidyl-4,4-Diaminodiphenylmethan, Tetraglycidyl-meta-Xylenediamine; sowie Epoxide, welche nach üblichen Verfahren aus mehrfach ungesättigten Carbonsäuren oder einfach ungesättigten Carbonsäureestern ungesättigter Alkohole hergestellt worden sind; Glycidylester; Polyglycidylester, die durch Polymerisation oder Mischpolymerisation von Glycidylestern ungesättigter Säuren gewonnen werden können oder aus anderen sauren Verbindungen, zum Beispiel aus Cyanursäure, Diglycidylsulfid oder cyclischem Trimethylentrisulfon bzw. dessen Derivaten erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Weitere bevorzugte Epoxide sind cycloaliphatische Epoxide wie 3,4-Epoxycyclohexylmethyl-3,4-epoxycyclohexancarboxylat (UVACure1500).

Gemäß bevorzugter Ausführungsformen wird als Vernetzer Tetraglycidyl-meta-Xylenediamin verwendet.

Gemäß bevorzugter Ausführungsformen sind die Poly(meth)acrylate mittels eines Vernetzer-Beschleuniger-Systems ("Vernetzungssystem") vernetzt, um eine bessere Kontrolle sowohl über die Verarbeitungszeit, die Vernetzungskinetik sowie den Vernetzungsgrad zu erhalten. Das Vernetzer-Beschleuniger-System umfasst bevorzugt zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltiger Verbindungen beschleunigend wirkende Substanz als Beschleuniger.

Als Beschleuniger werden erfindungsgemäß besonders bevorzugt Amine eingesetzt. Diese sind formell als Substitutionsprodukte des Ammoniaks aufzufassen; die Substituenten umfassen insbesondere Alkyl- und/oder Arylreste. Besonders bevorzugt werden solche Amine eingesetzt, die mit den zu vernetzenden Polymeren keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Aminogruppen aufweisen. Besonders bevorzugte Beschleuniger sind tertiäre Amine wie beispielweise Triethylamin, Triethylendiamin, Benzyldimethylamin, Dimethylaminomethylphenol, 2,4,6-Tris-(N,N-dimethylaminomethyl)-phenol, N,N'-Bis(3-(dimethylamino)propyl)harnstoff. Weitere bevorzugte Beschleuniger sind multifunktionelle Amine wie Diamine, Triamine und/oder Tetramine, zum Beispiel Diethylentriamin, Triethylentetramin, Trimethylhexamethylendiamin.

Weitere bevorzugte Beschleuniger sind Aminoalkohole, insbesondere sekundäre und/oder tertiäre Aminoalkohole, wobei im Falle mehrerer Aminofunktionalitäten pro Molekül bevorzugt mindestens eine, besonders bevorzugt alle Aminofunktionalitäten sekundär und/oder tertiär sind. Besonders bevorzugte, derartige Beschleuniger sind Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1 ,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin.

Weitere geeignete Beschleuniger sind Pyridin, Imidazole wie beispielsweise 2-Methylimidazol und 1,8-Diazabicyclo[5.4.0]undec-7-en. Auch cycloaliphatische Polyamine können als Beschleuniger eingesetzt werden. Geeignet sind auch Beschleuniger auf Phosphorbasis wie Phosphine und/oder Phosphoniumverbindungen, beispielsweise Triphenylphosphin oder Tetraphenylphosphoniumtetraphenylborat.

Auch quartäre Ammoniumverbindungen können als Beschleuniger verwendet werden; Beispiele sind Tetrabutylammoniumhydroxid, Cetyltrimethylammoniumbromid und Benzalkoniumchlorid.

Bevorzugt ist es, dass die erste Klebemasseschicht D 2 bis 10 Gew.-%, besonders bevorzugt 4 bis 8 Gew.-%, an Elektrolyten, bevorzugt ionischen Flüssigkeiten, bezogen auf 100 Gew.-% an enthaltenen Polymeren enthält, wobei die Polymere gemäß bevorzugter Ausführungsformen zu 100 Gew.-% Poly(meth)acrylate sind.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasseschicht an das Substrat vor dem Ablösen nicht negativ beeinträchtigt ist.

Die Klebemasse der ersten Klebemasseschicht D kann ferner weitere übliche Additive, wie Klebharze, Weichmacher, Kompatibilisatoren und Füllstoffe enthalten.

Als Kompatibilisatoren werden bevorzugt niedermolekulare Polyether, Polyamine, Polyvinylpyrrolidone oder aliphatische Polyester eingesetzt, die mit der Klebemasse homogen mischbar sind.

Einige Weichmacher können auch zugleich Kompatibilisatoren sein, wie z.B. Polyethylenglykol (PEG).

Gemäß vorteilhafter Ausführungsformen enthält die Klebemasse der ersten Klebemasseschicht D wenigstens einen Polyether, bevorzugt wenigstens eine Substanz, die ausgewählt ist aus der Gruppe bestehend aus Polyethylenglykol (PEG), Polypropylenglykol (PPG), Polytetrahydrofuran, wobei PEG besonders bevorzugt ist. Hiermit wird die Ablösbarkeit besonders gut unterstützt. Ohne an eine bestimmte Theorie gebunden sein zu wollen, ist es denkbar, dass durch die genannten Substanzen, insbesondere PEG, der Ionenfluss des oder der Elektrolyten durch die Masseschicht beschleunigt wird.

Das Molekulargewicht (gemäß GPC) der genannten Substanzen liegt dabei bevorzugt zwischen 100 und 5000 g/mol, besonders bevorzugt zwischen 200 und 2000 g/mol.

Das erfindungsgemäße Klebeband umfasst wie oben ausgeführt wenigstens eine erste Klebemasseschicht D, wobei die Klebemasseschicht D wenigstens ein Elektrolyt enthält, eine zweite Klebemasseschicht C und wenigstens eine elektrisch leitfähige Trägerschicht T, die zwischen den Schichten D und C angeordnet ist, wobei die elektrisch leitfähige Trägerschicht eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-% ausgewählt ist aus der Gruppe bestehend aus Zinn, Chrom, Nickel, Titan und Eisen.

Die Trägerschicht T ist somit eine metallisierte Polymerschicht, wobei die Metallschicht (M) auf die Polymerfolie (P) aufgetragen, insbesondere aufgestäubt und/oder aufgedampft, ist. Hierbei versteht sich, dass eine Folie ein flächiges Gebilde ist, welches sich in der xy-Ebene erstreckt und in z-Richtung zwei Oberflächen aufweist.

Die Metallbeschichtung wird im Rahmen der vorliegenden Erfindung insbesondere und bevorzugt nur auf eine der Oberflächen aufgetragen. Hieraus ergibt sich, dass die Trägerschicht eine Polymerseite und eine metallisierte Seite aufweist.

Im Rahmen der vorliegenden Erfindung werden die Begriffe "Polymerfolie" und "Polymerschicht" synonym zueinander verwendet.

Das Auftragen des Metalls kann mit sämtlichen dem Fachmann bekannten Verfahren und Vorrichtungen erfolgen. Bevorzugt wird Metall unter verringertem Luftdruck aufgestäubt oder aufgedampft.

Das Polymer der Polymerfolie ist bevorzugt ausgewählt aus der Gruppe bestehend aus Polyestern, Polyethylen, Polypropylen, Polyolefinen oder Polyurethanen.

Besonders bevorzugt ist eine Polymerfolie aus Polyester, insbesondere auf Basis von Polyethylenterephthalat (PET) oder Polybutylenterephthalat, wobei Polyethylenterephthalat wiederum bevorzugt ist.

Das Metall der elektrisch leitfähigen Trägerschicht T ist zu mindestens 70 Gew.-% ausgewählt aus der Gruppe bestehend aus Zinn, Chrom, Nickel, Titan und Eisen. Das bedeutet das wenigstens ein Metall - ausgewählt aus der Gruppe bestehend aus Zinn, Chrom, Nickel, Titan und Eisen - zu mindestens 70 Gew.-% bezogen auf das Gesamtgewicht der Metallbeschichtung in der Metallbeschichtung vorhanden ist, wobei auch Legierungen verwendet werden können.

Besonders bevorzugt ist das Metall zu mindestens 80 Gew.-%, ganz besonders bevorzugt zu mindestens 90 Gew.-%, insbesondere zu mindestens 95 Gew.-% oder auch 98 bis 100 Gew.-%, insbesondere 100 Gew.-%, in der Metallbeschichtung vorhanden.

Im Fall von weniger als 100 Gew.-% sind weitere Bestandteile in der Metallbeschichtung vorhanden, wie beispielsweise Kohlenstoff oder andere Metalle.

Soll mit nur einem Metall beschichtet werden, so beträgt der Anteil dieses Metalls idealerweise 100 Gew.-%. Durch etwaige Spuren und/oder Verunreinigungen umfasst die Metallbeschichtung bei Verwendung nur eines Metalls dann insbesondere 98 bis 100 Gew.- % des jeweiligen Metalls. Im Rahmen der vorliegenden Erfindung ist aber dennoch das Metall, welches im Fall von Spuren und/oder Verunreinigungen zu 98 bis weniger als 100 Gew.-% in der Metallbeschichtung vorhanden ist, dasjenige Metall, welches die Eigenschaften im Hinblick auf die der Erfindung zugrunde liegende Aufgabe bestimmt. Gemäß vorteilhafter Ausführungsformen der Erfindung ist das Metall ausgewählt aus der Gruppe bestehend aus Zinn, Nickel, Titan und Eisen, wiederum bevorzugt ausgewählt aus der Gruppe bestehend aus Zinn, Nickel und Eisen.

Gemäß besonders vorteilhafter Ausführungsformen der Erfindung ist die Polymerfolie mit Zinn beschichtet, wobei Zinn zu mindestens 80 Gew.-%, ganz besonders bevorzugt zu mindestens 90 Gew.-%, insbesondere zu mindestens 95 Gew.-% oder auch 100 Gew.-%, in der Metallbeschichtung vorhanden ist.

Gemäß weiterer besonders vorteilhafter Ausführungsformen der Erfindung ist die Polymerfolie mit Nickel beschichtet, wobei Nickel zu mindestens 80 Gew.-%, ganz besonders bevorzugt zu mindestens 90 Gew.-%, insbesondere zu mindestens 95 Gew.-% oder auch 100 Gew.-%, in der Metallbeschichtung vorhanden ist.

Gemäß weiterer besonders vorteilhafter Ausführungsformen der Erfindung ist die Polymerfolie mit Eisen beschichtet, wobei Eisen zu mindestens 80 Gew.-%, ganz besonders bevorzugt zu mindestens 85 Gew.-%, insbesondere zu mindestens 95 Gew.-% oder auch 100 Gew.-%, in der Metallbeschichtung vorhanden ist.

Gemäß weiterer vorteilhafter Ausführungsformen der Erfindung ist die Polymerfolie mit Titan beschichtet, wobei Titan zu mindestens 80 Gew.-%, ganz besonders bevorzugt zu mindestens 90 Gew.-%, insbesondere zu mindestens 95 Gew.-% oder auch 100 Gew.-%, in der Metallbeschichtung vorhanden ist.

Gemäß weiterer vorteilhafter Ausführungsformen der Erfindung ist die Polymerfolie mit Chrom beschichtet, wobei Chrom zu mindestens 80 Gew.-%, ganz besonders bevorzugt zu mindestens 90 Gew.-%, insbesondere zu mindestens 95 Gew.-% oder auch 100 Gew.-%, in der Metallbeschichtung vorhanden ist.

Gemäß vorteilhafter Ausführungsformen der Erfindung ist die Polymerfolie mit wenigstens zwei Metallen beschichtet, die ausgewählt sind aus der Gruppe bestehend aus Zinn, Chrom, Nickel, Titan und Eisen.

Gemäß vorteilhafter Ausführungsformen der Erfindung beträgt der Gesamtgewichtsanteil an Metallen ausgewählt aus der Gruppe bestehend aus Zinn, Chrom, Nickel, Titan und Eisen mindestens 80 Gew.-%, bevorzugt mindestens 90 Gew.-%, insbesondere mindestens 98 Gew.-% bis 100 Gew.-% bezogen auf das Gesamtgewicht der Metallbeschichtung.

Eisen kann insbesondere und beispielsweise in Form von Stahl verwendet werden.

In einer vorteilhaften Ausführungsform enthält der Stahl mindestens 80 Gew.-% Eisen und bevorzugt zudem mindestens 10 Gew.-% Chrom. Beispielsweise wird für die Metallbeschichtung ein Stahl verwendet, der 88 Gew.-% Eisen und 12 Gew.-% Chrom enthält.

Bevorzugt weist die Polymerfolie der Trägerschicht Teine Schichtdicke von 4 bis 50 $\mu$m, besonders bevorzugt von 12 bis 36 $\mu$m, auf.

Die Metallbeschichtung weist bevorzugt eine Dicke von 10 nm (Nanometer) bis 5 $\mu$m (Mikrometer), besonders bevorzugt von 50 nm (Nanometer) bis 1 $\mu$m (Mikrometer), auf.

Die Trägerschicht umfassend die Polymerfolie und deren Metallbeschichtung ist derart zwischen den Klebemasseschichten Schichten D und C angeordnet, dass die Metallbeschichtung in Richtung der elektrisch ablösbaren, Elektrolyt-haltigen Klebemasseschicht D ausgerichtet ist.

Damit ist die Metallbeschichtung zwischen der Polymerfolie und der Klebemasseschicht D angeordnet.

Dabei ist die Klebemasseschicht D gemäß bevorzugter Ausführungsformen direkt in Kontakt mit der Metallbeschichtung.

Gemäß weiterer vorteilhafter Ausführungsformen kann aber auch eine weitere Schicht, beispielsweise in Form einer vergleichsweise dünnen Schicht und/oder einer unterbrochenen oder perforierten Lage, zwischen der Metallbeschichtung und der Klebemasseschicht D angeordnet sein. Hierbei ist die weitere Schicht ebenfalls elektrisch leitfähig oder so ausgestaltet, dass die elektrische Leitfähigkeit zwischen der Metallbeschichtung und der Klebemasseschicht D weiterhin gewährleistet ist.

Bei einer solchen Schicht kann es sich beispielsweise um eine dünne Schicht handeln, die zum Korrosionsschutz auf die Metallschicht aufgebracht ist.

Eine solche Korrosionsschutzschicht kann beispielsweise Polyurethan umfassen. Vorteilhafterweise beträgt die Schichtdicke der Korrosionsschutzschicht in z-Richtung 300 nm (Nanometer) oder weniger, insbesondere und beispielsweise 10 bis 50 nm.

Die zusätzliche Korrosionsschutzschicht ist bevorzugt durch ihre Dicke und/oder Konstruktion noch ausreichend elektrisch leitfähig.

Ferner ist es denkbar, dass zwischen der Polymerfolie und der Metallbeschichtung eine weitere Schicht angeordnet ist. Bei einer solchen weiteren Schicht zwischen Polymerfolie und

Metall kann es sich beispielsweise um eine dünne Primerschicht handeln, die zur verbesserten Anhaftung des Metalls an das Polymer auf die Polymerfolie aufgebracht ist.

Ein weiterer Gegenstand der vorliegenden Erfindung ist ein verklebter Verbund umfassend wenigstens folgende Schichten:

- Ein erstes Substrat A; und

- Ein zweites Substrat B; und

- Ein erfindungsgemäßes Klebeband, welches zwischen dem Substrat A und dem Substrat B angeordnet ist und die Substrate A und B miteinander verklebt.

Ein weiterer Gegenstand der vorliegenden Erfindung ist ein Verfahren zum elektrischen Lösen des erfindungsgemäßen Verbundes, umfassend wenigstens folgende Verfahrensschritte:

i .) Anlegen einer Spannung an zwei verschiedenen Stellen des Verbundes, wobei die Spannung bevorzugt von 2 bis 50 V beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Bevorzugt beträgt die Spannung von 2 bis 30 V.

Gemäß bevorzugter Ausführungsformen der Erfindung beträgt die Spannung von 3 bis 12 V. Eine derartige Spannung kann insbesondere dadurch angelegt werden, dass eine in der unmittelbaren Nachbarschaft der Verklebung befindliche Batterie verwendet wird, wie insbesondere und beispielsweise in einem Mobiltelefon, Tablet etc.

Gemäß weiterer bevorzugter Ausführungsformen der Erfindung beträgt die Spannung von 12 bis 50 V. Durch diese vergleichsweise hohe Spannung kann das Wiederablösen besonders schnell erfolgen; die Spannung, insbesondere bei bis zu 50 V, muss dabei nur für wenige Sekunden angelegt werden.

Dem Fachmann ist grundsätzlich bekannt, wie eine Spannung anzulegen ist, ohne, dass es zu unerwünschten Kurzschlüssen kommt.

Die zeitliche Dauer des Anlegens der Spannung in Schritt i.) kann, insbesondere in Abhängigkeit der gewählten Spannung, von wenigen Sekunden, insbesondere 2 Sekunden, bis zu 900 Sekunden, bevorzugt bis zu 600 Sekunden, besonders bevorzugt bis zu 300 Sekunden, wiederum bevorzugt bis zu 120 Sekunden, betragen.

Natürlich ist es auch denkbar, dass die Spannung für einen längeren Zeitraum als 900 Sekunden angelegt wird, insbesondere, wenn die Spannung vergleichsweise niedrig ist.

Durch das erfindungsgemäße Verfahren zum elektrischen Lösen des erfindungsgemäßen Verbundes lassen sich die Substrate A und B auf schnelle und einfache Weise voneinander lösen, ohne dass ein allzu großer Kraftaufwand erforderlich ist.

Sofern sich die Schichten nach Anlegen der Spannung nicht ohne weitere Einwirkung voneinander lösen, umfasst das erfindungsgemäße Verfahren wenigstens den weiteren Verfahrensschritt:

ii.) Krafteinwirkung auf die Klebemasseschicht D und/oder das Substrat A und/oder das Substrat B, sodass der Abstand zwischen den Substraten A und B vergrößert wird.

Die Kraft, die gemäß Schritt ii.) eventuell noch erforderlich ist, ist deutlich geringer als die Klebkraft vor dem Anlegen der Spannung gemäß Schritt i.)

Das Anlegen der Spannung gemäß Schritt i.) erfolgt an zwei verschiedenen Stellen des erfindungsgemäßen verklebten Verbundes. An welche Stellen die Spannung zweckmäßig angelegt wird, hängt vom Aufbau des Klebebandes und des verklebten Verbundes und somit der Beschaffenheit der einzelnen Schichten und miteinander verklebten Substrate A und B ab.

Im Folgenden werden einige bevorzugte Ausführungsformen ausgeführt.

Gemäß bevorzugter Ausführungsformen der Erfindung besteht das Klebeband aus den folgenden Schichten:

- Eine erste Klebemasseschicht D, wobei die Klebemasseschicht D wenigstens ein Elektrolyt enthält; und

- Eine zweite Klebemasseschicht C; und

- Eine elektrisch leitfähige Trägerschicht T, die zwischen den Schichten D und C angeordnet ist, wobei die elektrisch leitfähige Trägerschicht eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-% ausgewählt ist aus der Gruppe bestehend aus Zinn, Chrom, Nickel, Titan und Eisen; und

- optional eine Korrosionsschutzschicht zwischen der Metallbeschichtung und der Klebemasseschicht D.

Ein derartiges Klebeband kann als doppelseitiges Klebeband über die zweite Klebemasseschicht C an eine Vielzahl unterschiedlicher Substrate angepasst werden.

Ein derartiges Klebeband kann insbesondere und vorteilhafterweise auch verwendet werden, um später Substrate A und B voneinander zu lösen, von denen nur eines elektrisch leitfähig ist, zum Beispiel das Substrat A.

Hierbei kann dann eine Spannung an die elektrisch leitfähige Trägerschicht sowie an das leitfähige Substrat A angelegt werden.

Das Klebeband wird zuvor vorteilhafterweise als doppelseitiges Klebeband so verklebt, dass die elektrisch lösbare Klebemasseschicht D an das leitfähige Substrat A gebunden ist und die zweite Klebemasseschicht an das Substrat B, welches leitfähig sein kann, aber nicht muss.

Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander.

Gemäß bevorzugter Ausführungsformen der Erfindung überragt die elektrisch leitfähige Trägerschicht T die erste Klebemasseschicht D in wenigstens einer Erstreckungsrichtung der Schichtebene seitlich, sodass die elektrisch leitfähige Trägerschicht T einen Überstand mit einer freien Fläche aufweist, wobei die zweite Klebemasseschicht C wenigstens so ausgebildet ist, dass sie die elektrisch leitfähige Trägerschicht T an der der freien Fläche gegenüberliegenden Fläche stützt und somit ebenfalls einen Überstand aufweist.

Ein derartiger Schichtverbund wird insbesondere dadurch hergestellt, dass die Klebemasseschicht C mit der Polymerseite der Trägerschicht T verbunden, z.B. laminiert wird, wobei die Metallbeschichtung entweder bereits auf der der Klebemasseschicht C gegenüberliegenden Fläche der Polymerfolie aufgebracht ist oder das Metall erst nach dem Laminieren der Polymerfolie auf die Klebemasseschicht C auf die freie Oberfläche der Polymerfolie aufgebracht wird.

Anschließend wird in jedem Fall der entstandene Schichtverbund CT auf einer Seite, also auf einer Fläche, der Klebemasseschicht D angebracht, und zwar so, dass die Klebemasseschicht D die Trägerschicht T nicht vollständig bedeckt. Hieraus resultiert, dass die Trägerschicht T - gestützt von der Klebemasseschicht C - die Klebemasseschicht D in wenigstens einer Erstreckungsrichtung der Schichtebene seitlich überragt, wobei die Metallbeschichtung zwischen Polymerfolie und Klebemasseschicht D angeordnet ist und optional eine Korrosionsschutzschicht in Richtung der Schicht D trägt.

An die freie Fläche der metallisierten Polymerfolie der Trägerschicht T kann hierdurch auf besonders einfache Weise eine Spannung angelegt werden.

Für die drei Schichten D, T und C wird im Rahmen der vorliegenden Anmeldung auch der Begriff Dreischichtverbund D-T-C verwendet.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B; und

- Ein erfindungsgemäßes Klebeband, welches aus dem Dreischichtverbund D-T-C besteht und die Substrate A und B so miteinander verklebt, dass die Klebemasseschicht D an das leitfähige Substrat A gebunden ist.

Gemäß weiterer bevorzugter Ausführungsformen der Erfindung umfasst das Klebeband eine oder mehrere weitere Schichten, wie insbesondere Klebemasseschichten und/oder Trägerschichten.

Gemäß bevorzugter Ausführungsformen der Erfindung umfasst das Klebeband:

- Eine erste Klebemasseschicht D, wobei die Klebemasseschicht D wenigstens ein Elektrolyt enthält; und

- Eine zweite Klebemasseschicht C; und

- Eine erste elektrisch leitfähige Trägerschicht T, die zwischen den Schichten D und C angeordnet ist, wobei die elektrisch leitfähige Trägerschicht eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-% ausgewählt ist aus der Gruppe bestehend aus Zinn, Chrom, Nickel, Titan und Eisen; und

- Wenigstens eine zweite elektrisch leitfähige Trägerschicht T', die auf der der Trägerschicht T gegenüberliegenden Oberfläche der Klebemasseschicht D angeordnet ist, wobei die zweite elektrisch leitfähige Trägerschicht T' ebenfalls eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-% ausgewählt ist aus der Gruppe bestehend aus Zinn, Chrom, Nickel, Titan und Eisen; und

- Eine dritte Klebemasseschicht C', die auf der der ersten Klebemasseschicht D gegenüberliegenden Oberfläche der zweiten Trägerschicht T' angeordnet ist.

Ein derartiges Klebeband hat wenigstens den Schichtaufbau C-T-D-T'-C' und kann als doppelseitiges Klebeband über die Klebemasseschichten C und C' an eine Vielzahl unterschiedlicher Substrate angepasst werden.

Hierbei kann es sich prinzipiell um die gleichen Substrate handeln wie gemäß der vorherigen Ausführungsformen, in denen das Klebeband den Dreischichtaufbau D-T-C hat.

Ein derartiges Klebeband kann insbesondere und vorteilhafterweise aber auch verwendet werden, um später Substrate A und B voneinander zu lösen, von denen keines elektrisch leitfähig ist, in dem die Spannung an die Schichten T und T' angelegt wird.

Analog zu obigen Ausführungsformen wird angenommen, dass durch das Anlegen der Spannung eine Wanderung des Elektrolyten, insbesondere eine Trennung der Anionen und Kationen einer ionischen Flüssigkeit, in der Klebemasseschicht D erfolgt. Hierdurch wird die Adhäsion der Klebemasseschicht D an die elektrisch leitfähigen Trägerschichten T und T' stark herabgesetzt und es erfolgt ein Lösen dieser Schichten voneinander.

Für die zweite elektrisch leitfähige Trägerschicht T' gelten sämtliche Ausführungen zur ersten Trägerschicht T analog.

Auch hier kann die Metallbeschichtung der ersten und/oder der zweiten Trägerschicht T bzw. T' optional eine Korrosionsschutzschicht in Richtung der Klebemasseschicht D aufweisen.

Gemäß bevorzugter Ausführungsformen der Erfindung überragen die erste elektrisch leitfähige Trägerschicht T und die zweite elektrisch leitfähige Trägerschicht T' jeweils die erste Klebemasseschicht D in wenigstens einer Erstreckungsrichtung der Schichtebene seitlich, sodass die erste elektrisch leitfähige Trägerschicht T und die zweite elektrisch leitfähige Trägerschicht T' jeweils einen Überstand mit einer freien Fläche aufweisen, wobei die zweite Klebemasseschicht C und die dritte Klebemasseschicht C' wenigstens so ausgebildet sind, dass sie die jeweilige benachbarte elektrisch leitfähige Trägerschicht T bzw. T' an der der freien Fläche gegenüberliegenden Fläche stützen und somit ebenfalls einen Überstand aufweisen.

Ein derartiger Schichtverbund wird insbesondere dadurch hergestellt, dass die Klebemasseschicht C mit der Polymerseite der Trägerschicht T und die Klebemasseschicht D' mit der Trägerschicht T' verbunden, z.B. laminiert wird, wobei die jeweilige Metallbeschichtung entweder bereits auf der der Klebemasseschicht C bzw. C' gegenüberliegenden Fläche der Polymerfolie aufgebracht ist oder das Metall erst nach dem Laminieren der Polymerfolie auf die Klebemasseschicht C bzw. C' auf die jeweils freie Oberfläche der Polymerfolie aufgebracht wird.

Anschließend werden in jedem Fall die entstandenen Schichtverbunde CT bzw. C'T' auf beiden Seiten einer Klebemasseschicht D angebracht, und zwar so, dass die Klebemasseschicht D die Trägerschichten T und T' jeweils nicht vollständig bedeckt. Hieraus resultiert, dass die Trägerschichten T und T' - gestützt von den jeweiligen Klebemasseschichten C bzw. C' - die Klebemasseschicht D in wenigstens einer Erstreckungsrichtung der Schichtebene seitlich überragen, wobei die Metallbeschichtung der jeweiligen Trägerschichten T und T' jeweils zwischen der Klebemasseschicht D und der jeweiligen Polymerfolie angeordnet ist.

An die freien Flächen der metallisierten Polymerfolien der Trägerschichten T und T' kann jeweils auf besonders einfache Weise eine Spannung angelegt werden.

Bevorzugt sind die freien Flächen räumlich voneinander getrennt, was das Anlegen der Spannung an diese vergleichsweise nahe beieinander liegenden Schichten erleichtert.

Bevorzugt besteht das Klebeband gemäß der vorstehend beschriebenen Ausführungsformen aus den fünf Schichten C, T, D, T' und C'.

Hierfür wird im Rahmen der vorliegenden Anmeldung auch der Begriff Fünfschichtverbund C-T-D-T'-C' verwendet.

Gemäß bevorzugter Ausführungsformen der vorliegenden Erfindung umfasst der verklebte Verbund somit folgende Schichten:

- Ein erstes Substrat A; und

- Ein zweites Substrat B; und

- Ein erfindungsgemäßes Klebeband, welches aus dem Fünfschichtverbund C-T-D-T'-C' besteht und die Substrate A und B miteinander verklebt.

Die Trägerschichten T und T' gemäß der Ausführungsformen des erfindungsgemäßen Klebebandes umfassend den Fünfschichtverbund oder bestehend aus dem Fünfschichtverbund sind unabhängig voneinander und können gleich oder verschieden voneinander ausgeführt sein.

Gemäß bevorzugter Ausführungsformen des erfindungsgemäßen Klebebandes umfassend den Fünfschichtverbund oder bestehend aus dem Fünfschichtverbund sind die elektrisch leitfähige erste Trägerschicht T und die elektrisch leitfähige zweite Trägerschicht T' gleich ausgestaltet, insbesondere hinsichtlich des Metalls und der Schichtdicke.

Gemäß bevorzugter Ausführungsformen besteht die zweite elektrisch leitfähige Trägerschicht T' aus dem gleichen Material, das heißt dem gleichen Polymer und der gleichen Metallbeschichtung sowie der gleichen Schichtdicken von Polymerfolie und Metallbeschichtung, wie die Trägerschicht T.

Gemäß weiterer bevorzugter Ausführungsformen des erfindungsgemäßen Klebebandes umfassend den Fünfschichtverbund oder bestehend aus dem Fünfschichtverbund sind die elektrisch leitfähige erste Trägerschicht T und die elektrisch leitfähige zweite Trägerschicht T' unterschiedlich ausgestaltet.

Die Schicht T und bevorzugt auch T' ist insbesondere in x,y-Richtung elektrisch leitfähig.

Eine Schicht gilt im Rahmen der vorliegenden Erfindung insbesondere dann als "elektrisch leitfähig", wenn der Oberflächenwiderstand kleiner als 10 Ohm/sq ist, gemessen nach dem Standard MIL-DTL-83528C.

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Erfindungsgemäß umfasst das Klebeband eine zweite Klebemasseschicht C.

Gemäß den Ausführungsformen des erfindungsgemäßen Klebebandes umfassend den Fünfschichtverbund oder bestehend aus dem Fünfschichtverbund umfasst das Klebeband eine dritte Klebemasseschicht C'.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Die Klebemasseschichten C und C' sind unabhängig voneinander und können gleich oder verschieden voneinander sein.

Die Klebemasseschichten C bzw. C und/oder C' sind gemäß bevorzugter Ausführungsformen der Erfindung wie die Klebemasseschicht D poly(meth)acrylat-basiert. Hierbei gelten sämtliche obige Ausführungen zu der Definition und Art und Menge von poly(meth)acrylat-basiert bzw. Poly(meth)acrylaten.

Gemäß bevorzugter Ausführungsformen der Erfindung wird in den Klebemasseschichten C bzw. C und/oder C' das gleiche Poly(meth)acrylat verwendet, wie in der Klebemasseschicht D.

Hierdurch können insbesondere ähnliche Substrate, hier als A und B bezeichnet, miteinander verklebt sein. Ferner wird hierdurch die Alterungs- und Temperaturbeständigkeit des Klebebandes erhöht.

Gemäß weiterer bevorzugter Ausführungsformen der Erfindung wird in den Klebemasseschichten C bzw. C und/oder C' ein Polymer verwendet, welches von dem in der Klebemasseschicht D verwendeten Poly(meth)acrylat verschieden ist.

Hierdurch können die Eigenschaften besonders gut an das oder die Substrate angepasst werden, welches über die Klebemasseschicht C bzw. C und/oder C' verklebt ist. Dadurch, dass die Klebemasseschicht C bzw. C und/oder C' bevorzugt keinen Elektrolyten, wie eine ionische Flüssigkeit enthält bzw. enthalten muss, müssen die Bestandteile hierauf nicht abgestimmt werden.

Gemäß weiterer bevorzugter Ausführungsformen der Erfindung wird in den Klebemasseschichten C bzw. C und/oder C' somit ein Poly(meth)acrylat verwendet, welches von dem in der Klebemasseschicht D verwendeten Poly(meth)acrylat verschieden ist.

Gemäß weiterer bevorzugter Ausführungsformen der Erfindung ist in den Klebemasseschichten C bzw. C und/oder C' wenigstens ein Vinylaromatenblockcopolymer enthalten.

Gemäß bevorzugter Ausführungsformen der Erfindung basieren die Klebemasseschichten C bzw. C und/oder C' auf Vinylaromatenblockcopolymer(en), das heißt, dass gemäß dieser Ausführungsformen Vinylaromatenblockcopolymere die Hauptpolymere in der Klebemasseschicht darstellen und hierbei zu 70 bis 100 Gew.-% enthalten sind, und zwar bezogen auf 100 Gew.-% an in der Schicht C enthaltenen Polymeren.

Etwaige in der Klebemasseschicht enthaltenen Klebharze werden im Rahmen dieser Berechnung nicht zu den 100 Gew.-% an enthaltenen Polymeren gezählt.

Bei dem bzw. den Vinylaromatenblockcopolymer(en) kann es sich prinzipiell um jegliche dem Fachmann bekannten Typen handeln.

Bevorzugt haben die Vinylaromatenblockcopolymere den Aufbau A-B, A-B-A und/oder $(AB)_n X$, wobei X für einen Rest eines Kopplungsreagenzes oder Initiators steht und n größer oder gleich 2 ist.

Besonders bevorzugt haben das oder die Vinylaromatenblockcopolymere den Aufbau A-B-A, optional im Gemisch mit Anteilen an A-B, wobei letztere den Diblockanteil darstellen.

Ganz besonders bevorzugt liegen das oder die Vinylaromatenblockcopolymere als Gemisch von Polymeren des Aufbaus A-B-A mit Polymeren des Aufbaus A-B vor.

Die Blöcke A stellen die aus Vinylaromaten-Monomeren hergestellten Blöcke dar.

Bevorzugt sind die Blöcke A hergestellt aus einer Polymerisationsmischung enthaltend wenigstens Styrol und $\alpha$-Methylstyrol, bevorzugt hergestellt aus einer Polymerisationsmischung enthaltend wenigstens Styrol. Ganz besonders bevorzugt sind die Blöcke A aus Styrol hergestellte Blöcke und damit Polystyrol-Blöcke.

Die Blöcke B stellen die übrigen Blöcke des Block-Copolymers dar. Bevorzugt sind die Blöcke B hergestellt aus einer Polymerisationsmischung enthaltend Monomere von 1,3-Dienen und Isobutylen, weiter bevorzugt hergestellt aus einer Polymerisationsmischung enthaltend Butadien und/oder Isopren. Ganz besonders bevorzugt sind die Blöcke B aus Butadien hergestellte Blöcke und damit Polybutadien-Blöcke.

Besonders bevorzugt handelt es sich bei dem oder den Vinylaromatenblockcopolymer(en) um Styrolblockcopolymer(e), wiederum bevorzugt Styrolbutadien-Blockcopolymere des Aufbaus A-B-A und optionalen Anteilen an A-B.

Gemäß besonders vorteilhafter Ausführungsformen weist die Haftklebmasseschicht als Vinylaromatenblockcopolymer eine Mischung aus wenigstens zwei Styrolbutadien-Blockcopolymeren auf, wobei ein erstes Blockcopolymer einen Diblockanteil A-B von 50 bis 85 % aufweist und ein zweites Blockcopolymer einen Diblockanteil A-B von 5 bis 35 % aufweist.

Der Diblock-Anteil wird mittels GPC bestimmt und kann wie dem Fachmann bekannt durch die Wahl geeigneter Herstellverfahren gezielt eingestellt werden.

Bevorzugt beträgt das Gewichtsmittel der Molekulargewichtsverteilung Mw (gemäß GPC) der A-B-A Polymerstränge des oder der enthaltenen Vinylaromatenblockcopolymere von 50.000 g/mol bis 300.000 g/mol, besonders bevorzugt von 80.000 bis 180.000 g/mol.

Wie oben ausgeführt können die Klebemasseschichten C und C' gleich oder verschieden voneinander sein. Beispielsweise kann eine der Klebemasseschichten, zum Beispiel C, aus einer Acrylat-basierte Klebemasse aufgebaut sein, während die andere Schicht, im selben Beispiel C', auf einer Klebemasse aufgebaut ist, die auf Vinylaromatenblockcopolymer(en) basiert.

Gemäß bevorzugter Ausführungsformen der Erfindung weisen die Klebemasseschichten C bzw. C und/oder C' wenigstens ein Klebharz auf, insbesondere wenn sie auf Vinylaromatenblockcopolymeren als Hauptpolymere basiert.

Hierdurch wird die Klebrigkeit der Klebemasse erhöht.

Unter einem "Klebharz" wird gemäß dem Verständnis des Fachmanns ein oligomeres oder polymeres Harz verstanden, das die Adhäsion (den Tack, die Eigenklebrigkeit) der Klebemasseschicht im Vergleich zu der kein Klebharz enthaltenden, ansonsten aber identischen Klebemasseschicht erhöht.

Bevorzugt weist das wenigstens eine Klebharz ein gewichtsmittleres Molekulargewicht $M_w$ von 400 bis 15.000 g/mol, besonders bevorzugt von 400 bis 5.000 g/mol, ganz besonders bevorzugt von 500 bis 2.000 g/mol, auf.

Bevorzugt ist das wenigstens eine Klebharz ausgewählt aus der Gruppe bestehend aus nicht hydrierten, partiell oder vollständig hydrierten Harzen auf Basis von Kolophonium oder Kolophoniumderivaten, hydrierten Polymerisaten des Dicyclopentadiens, nicht hydrierten, partiell, selektiv oder vollständig hydrierten Kohlenwasserstoffharzen auf Basis von C-5, C-5/C-9 oder C-9 Monomergemischen und Polyterpenharzen auf Basis von $\alpha$-Pinen und/oder ß-Pinen und/oder $\delta$-Limonen.

Dem Fachmann ist klar, dass er ein solches Klebharzes wählen kann, welches sich insbesondere mit dem oder den Vinylaromatenblockcopolymer(en) homogen vermischen lässt.

Die Klebemasse der Klebemasseschichten C bzw. C und/oder C' kann ferner weitere übliche Additive, wie Weichmacher und Füllstoffe enthalten.

Gemäß bevorzugter Ausführungsformen ist bzw. sind die erste Klebemasseschicht D und/oder die zweite Klebemasseschicht C bzw. die erste Klebemasseschicht D und/oder die zweite Klebemasseschicht C und/oder die dritte Klebemasseschicht C' geschäumt.

Hierdurch ist die Schockbeständigkeit des erfindungsgemäßen Klebebandes und damit auch des verklebten Verbundes verbessert. Somit ist sichergestellt, dass es nicht zu einer vorzeitigen unerwünschten Ablösung der Substrate voneinander kommt, insbesondere wenn Kräfte, durch z.B. Fallenlassen, auf den verklebten Verbund einwirken.

Bevorzugt ist die Schäumung mittels Expandierens von expandierbaren Mikroballons hergestellt. Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit bzw. als Gas sind insbesondere Kohlenwasserstoffe der niederen Alkane, beispielsweise Isobutan oder Isopentan geeignet, die als verflüssigtes Gas unter Druck in der Polymerhülle eingeschlossen sind, wobei Isopentan besonders bevorzugt ist.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Nuryon.

Unexpandierte Mikroballontypen sind auch als wässrige Dispersion mit einem Feststoff beziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten Klebemasse geeignet.

Geschäumte Klebemasseschichten können auch mit sogenannten vorexpandierten Mikroballons erzeugt werden. Bei vorexpandierten Mikroballons findet eine Expansion schon vor der Einmischung in die Polymermatrix statt. Vorexpandierte Mikroballons sind beispielsweise unter der Bezeichnung Dualite® oder mit der Typenbezeichnung Expancel xxx DE yy (Dry Expanded) von der Firma Nuryon kommerziell erhältlich. "xxx" steht für die Zusammensetzung der Mikroballonabmischung. "yy" steht für die Größe der Mikroballons im expandierten Zustand. Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Klebemasseschichten eingearbeitet. Erst nach dem Einarbeiten in die Schicht werden die Mikroballons expandiert. Auf diese Weise ergibt sich eine gleichmäßigere Verteilung der Mikroballons in der Polymermatrix.

Vorzugsweise werden die Mikroballons so gewählt, dass das Verhältnis der Dichte der Polymermatrix zu der Dichte der in die Polymermatrix einzuarbeitenden (nicht oder nur wenig vorexpandierten) Mikroballons zwischen 1 und 1,6, also:

$$\text{(Dichte der Polymermatrix)}/\text{(Dichte der einzuarbeitenden Mikroballons)} = 1 \text{ bis } 1{,}6 \text{ liegt.}$$

Erst nach oder unmittelbar bei der Einarbeitung erfolgt dann die Expansion. Bei Lösungsmittelhaltigen Massen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Bevorzugt beträgt der mittlere Durchmesser der von den Mikroballons gebildeten Hohlräume in der oder den geschäumten Klebemasseschicht(en) 10 bis 200 μm, besonders bevorzugt von 15 bis 200 μm, ganz besonders bevorzugt 15 bis 150 μm, wiederum bevorzugt von 20 bis 100 μm, wiederum besonders bevorzugt von 25 bis 70 μm. Mit den genannten bevorzugten und besonders bevorzugten Größenbereichen wird eine besonders gute Schockresistenz erzielt. Gleichzeitig sind die Größen im Hinblick auf die Schichtdicken der Klebemasseschicht(en) angepasst.

Da hierbei die Durchmesser der von den Mikroballons gebildeten Hohlräume in den geschäumten Klebemasseschicht(en) vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der Klebemasseschicht gemeint. Die Bestimmung des mittleren Durchmessers der von den Mikroballons gebildeten Hohlräume in einer Klebemasseschicht erfolgt anhand von 5 verschiedenen Kryobruchkanten des Klebebands im Rasterelektronenmikroskop (REM) bei 500-facher Vergrößerung. Die Durchmesser der auf den Aufnahmen zu sehenden Mikroballons werden graphisch derart ermittelt, dass aus den REM Aufnahmen für jeden einzelnen Mikroballon der zu untersuchenden Klebemasseschicht dessen maximale Ausdehnung in beliebiger (zweidimensionaler) Richtung entnommen wird und als dessen Durchmesser angesehen wird.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der oder den Klebemasseschichten liegt gemäß bevorzugter Ausführungsformen der Erfindung zwischen größer 0 Gew.-% und 12 Gew.-%, besonders bevorzugt zwischen 0,25 Gew.-% und 5 Gew.-%, ganz besonders bevorzugt zwischen 0,5 und 3 Gew.-%, jeweils bezogen auf die Gesamtzusammensetzung (einschließlich eingemischter Mikroballons) der entsprechenden Schicht. Die Angaben beziehen sich jeweils auf unexpandierte Mikroballons.

Durch die genannten Mengen wird der Zielkonflikt aus den Eigenschaften umfassend Klebrigkeit, Fließverhalten und Schäumung besonders gut gelöst.

Eine expandierbare Mikrohohlkugeln enthaltende Polymermasse der Klebemasseschicht(en) darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas. Geeignet für die Klebemasseschichten sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons").

Die absolute Dichte der geschäumten Klebemasseschicht(en) beträgt bevorzugt 350 bis 950 kg/m$^3$, besonders bevorzugt 450 bis 930 kg/m$^3$, ganz besonders bevorzugt 570 bis 880 kg/m$^3$. Die relative Dichte beschreibt das Verhältnis der Dichte der jeweils geschäumten Schicht zur Dichte der entsprechenden rezepturidentischen, ungeschäumten Schicht. Die relative Dichte der Klebemasseschicht(en) beträgt vorzugsweise 0,35 bis 0,99, stärker bevorzugt 0,45 bis 0,97, insbesondere 0,50 bis 0,90.

Bevorzugt ist die Klebemasse der Klebemasseschicht D eine Haftklebemasse und die Klebemasseschicht D damit bevorzugt eine Haftklebemasseschicht D.

Hierdurch lässt sich das Klebeband an dieser Seite leicht verkleben, insbesondere da im Vergleich zu hitzeaktivierbaren Klebesystemen kein Wärmeeintrag erforderlich ist. Ferner wandern die Bestandteile des Elektrolyten, wie insbesondere die Ionen von ionischen Flüssigkeiten, in Haftklebemassen schneller aufgrund der vergleichsweise geringen Vernetzungsdichten.

Die Klebemasse der Klebemasseschichten C bzw. C und/oder C' ist gemäß bevorzugter Ausführungsformen keine Haftklebemasse.

Gemäß weiterer bevorzugter Ausführungsformen der Erfindung ist die Klebemasse der Klebemasse der Klebemasseschichten C bzw. C und C' eine Haftklebemasse und die Klebemasseschicht C bzw. C und C' damit eine Haftklebemasseschicht.

In den Ausführungsformen, in denen alle äußeren Klebemasseschichten Haftklebemasseschichten sind, handelt es sich bei dem erfindungsgemäßen Klebeband um ein Haftklebeband.

Unter einer Haftklebemasse wird vorliegend erfindungsgemäß, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert:

$$G' = (\tau/\gamma) \cdot \cos(\delta) \ (\tau = \text{Schubspannung},\ \gamma = \text{Deformation},\ \delta = \text{Phasenwinkel} =$$
$$\text{Phasenverschiebung zwischen Schubspannungs- und Deformationsvektor}).$$

Die Definition des Verlustmoduls G" lautet:

$$G'' = (\tau/\gamma) \cdot \sin(\delta) \ (\tau = \text{Schubspannung},\ \gamma = \text{Deformation},\ \delta = \text{Phasenwinkel} =$$
$$\text{Phasenverschiebung zwischen Schubspannungs- und Deformationsvektor}).$$

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Bevorzugt weist die Haftklebemasse im Deformationsfrequenzbereich von $10^0$ bis $10^1$ rad/sec bei 23 °C einen Speichermodul G' und einen Verlustmoduls G" im Bereich von $10^3$ bis $10^7$ Pa, bestimmt gemäß DIN EN ISO 6721, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Bevorzugt weist die Haftklebemasse eine Glasübergangstemperatur von $\leq 23$ °C, bestimmt gemäß DIN 53765, auf.

Im Unterschied zu Haftklebemassen weisen Heißschmelzklebstoffe, z.B. auf der Basis von Polyamiden, Polyurethanen oder modifizierten Polyethylenen, bei Raumtemperatur (23 °C) keine Klebrigkeit auf, wiewohl auch in Heißschmelzklebstoffzusammensetzungen.

Ein weiterer Gegenstand der vorliegenden Erfindung ist ein Verfahren zur Herstellung des erfindungsgemäßen Klebebandes.

Das Verfahren umfasst bevorzugt wenigstens folgende Verfahrensschritte:

a) Bereitstellung einer ersten Klebemasseschicht D, wobei die Klebemasseschicht D wenigstens ein Elektrolyt enthält; und

b) Bereitstellung einer zweiten Klebemasseschicht C; und

c) Bereitstellung einer Polymerfolie, welche eine Metallbeschichtung aufweist, als elektrisch leitfähige Trägerschicht T, wobei das Metall der Metallbeschichtung zu mindestens 70 Gew.-% ausgewählt ist aus der Gruppe bestehend aus Zinn, Chrom, Nickel, Titan und Eisen; und

d) Laminieren der metallbeschichteten Polymerfolie T aus Schritt c) auf die Klebemasseschicht C, wobei die Metallbeschichtung auf der der Klebemasseschicht C gegenüberliegenden Seite der Polymerfolie angeordnet ist; und

e) Laminieren der Schichten D und T aufeinander, sodass ein Schichtverbund DTC entsteht, bei dem die Metallbeschichtung der Schicht T in Richtung der Schicht D ausgerichtet ist.

Das Bereitstellen der ersten Klebemasseschicht D gemäß Schritt a) erfolgt insbesondere dadurch, dass wenigstens eine Klebemasse bereitgestellt wird und wenigstens ein Elektrolyt zu dieser Klebemasse gegeben wird. Für die Klebemasse und den Elektrolyten gelten sämtliche obige Ausführungen.

Die Klebemasse wird mittels bekannter Verfahren in Schichtform gebracht, insbesondere durch Ausstreichen.

Ferner können ggf. einer oder mehrere Trocknungsschritte erfolgen.

Das Bereitstellen der zweiten Klebemasseschicht C gemäß Schritt b) erfolgt insbesondere dadurch, dass wenigstens eine weitere Klebemasse bereitgestellt wird.

Die Klebemasse wird mittels bekannter Verfahren in Schichtform gebracht, insbesondere durch Ausstreichen.

Ferner können ggf. einer oder mehrere Trocknungsschritte erfolgen.

Das Bereitstellen der Polymerfolie, welche eine Metallbeschichtung aufweist gemäß Schritt c) kann dadurch erfolgen, dass eine metallisierte Polymerfolie erworben wird.

Das Bereitstellen gemäß Schritt c) kann aber auch durch Aufbringen von Metall auf eine Polymerfolie erfolgen.

Für die Materialien, Konstruktionen und das Verfahren der Metallbeschichtung gelten sämtliche obige Ausführungen.

Die Polymerfolie ist dabei insbesondere einseitig mit Metall beschichtet, sodass sie nunmehr eine "Polymerseite" bzw. "Polymerfläche" und eine "metallisierte Seite" bzw. "metallisierte Fläche" aufweist.

Das Laminieren gemäß Schritt d) erfolgt auf dem Fachmann bekannte Weise, wobei die Schichten so aufeinandergelegt werden, dass die metallbeschichtete Fläche der Polymerfolie nach oben zeigt und somit noch für das Laminieren mit der Schicht D gemäß Schritt e) zur Verfügung steht.

Das Laminieren gemäß Schritt e) erfolgt auf dem Fachmann bekannte Weise, wobei die Schichten so aufeinandergelegt werden, dass ein Schichtverbund DTC als doppelseitiges Klebeband erhalten wird, wobei T zwischen D und C angeordnet ist und die metallisierte Seite von T in Richtung der Schicht D zeigt. Sofern keine zusätzliche Schicht, wie etwa eine Korrosionsschicht auf die Metallbeschichtung aufgebracht wird, sind die Metallbeschichtung und die Klebemasseschicht D dann in Kontakt zueinander.

Es ist bevorzugt, dass die Schichten so aufeinander laminiert werden, dass die Schicht T die Schicht D seitlich überragt. Hierbei wird der Schichtverbund aus der Klebemasseschicht C zusammen mit der Trägerschicht T, so auf der Klebemasseschicht D angeordnet, dass eine freie Fläche der Schicht T resultiert, also so, dass die Klebemasseschicht D die Schicht T nicht vollständig bedeckt.

Die Auflistung der Verfahrensschritte stellt - wo nicht erforderlich - nicht zwangsweise eine zeitliche Reihenfolge dar, wobei lediglich notwendigerweise aufeinander folgende Schritte zeitlich aufeinander folgen.

Erfindungswesentlich ist, dass die Schichten gemäß Schritt d) räumlich so angeordnet werden, dass sich der Schichtverbund DTC ergibt.

Das Verfahren zur Herstellung des Klebebandes in der Ausführungsform des Fünfschichtverbundes umfasst analoge Schritte, wobei zusätzlich die Schichten T' und C' bereitgestellt und ebenfalls in den Verbund laminiert werden, sodass sich der Schichtverbund CTD1'C' ergibt. Die zweite elektrisch leitfähige Trägerschicht T' wird bevorzugt analog zur ersten elektrisch leitfähigen Trägerschicht T durch Laminieren einer metallisierten Polymerfolie auf eine Fläche der ersten Klebemasseschicht D bereitgestellt.

Das erfindungsgemäße Klebeband stellt insbesondere ein doppelseitiges Klebeband dar, bei dem je nach Ausführungsform eine Fläche der ersten Klebemasseschicht D und eine Fläche der zweiten Klebemasseschicht C (Dreischichtverbund D-T-C) oder jeweils eine Fläche der Klebemasseschichten C und C' (Fünfschichtverbund C-T-D-T'-C') jeweils zum Verkleben von Substraten verfügbar sind.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 15 bis 150 $\mu$m, besonders bevorzugt von 20 bis 100 $\mu$m, ganz besonders bevorzugt von 25 bis 70 $\mu$m.

In den Ausführungsformen des Dreischichtverbundes D-T-C sowie des Fünfschichtverbundes C-T-D-T'-C' weisen die Klebemasseschichten D und C bzw. D und C sowie D und C' gemäß bevorzugter Ausführungsformen unterschiedliche Schichtdicken auf, wobei die Dicke der Klebemasseschicht D beispielsweise geringer ist als die der Klebemasseschichten C bzw. C und C'.

Gemäß weiterer bevorzugter Ausführungsformen weisen die Schichten D und C bzw. D, C und C' die gleiche Schichtdicke auf.

Wenn die Schichtdicke der Schicht D zu hoch ist, wird diese aufgrund der enthaltenen Elektrolyten ggf. unwirtschaftlich teuer.

Das elektrisch leitfähige Substrat sämtlicher Ausführungsformen kann beispielsweise ein Gehäuse aus Metall von einem Mobiltelefon sein.

Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.

Ein weiterer Gegenstand der vorliegenden Erfindung ist die Verwendung des erfindungsgemäßen Klebebands zur Verklebung von Bauteilen in elektronischen Geräten, Automobilen, medizinischen Geräten und zahnmedizinischen Geräten.

Nachfolgend werden bevorzugte Ausführungsformen der Erfindung unter Bezugnahme auf die beiliegenden Figuren näher erläutert und beschrieben. Dabei zeigen:

Fig. 1 eine vereinfachte schematische Querschnittsdarstellung durch ein erfindungsgemäßes doppelseitiges Klebeelement in einer bevorzugten Ausführungsform; und
Fig. 2 eine vereinfachte schematische Querschnittsdarstellung durch ein erfindungsgemäßes doppelseitiges Klebeelement in einer bevorzugten Ausführungsform; und
Fig. 3 eine vereinfachte schematische Querschnittsdarstellung durch einen erfindungsgemäßen verklebten Verbund einer bevorzugten Ausführungsform; und
Fig. 4 eine vereinfachte schematische Querschnittsdarstellung durch einen erfindungsgemäßen verklebten Verbund, an den eine Spannung angelegt ist, in einer bevorzugten Ausführungsform; und
Fig. 5 eine vereinfachte schematische Querschnittsdarstellung durch einen erfindungsgemäßen verklebten Verbund, nachdem eine Spannung angelegt wurde und
hierdurch eine adhäsive Spaltung erfolgt ist; und
Fig. 6 eine vereinfachte schematische Querschnittsdarstellung durch einen erfindungsgemäßen verklebten Verbund einer bevorzugten Ausführungsform; und
Fig. 7 eine vereinfachte schematische Querschnittsdarstellung durch einen erfindungsgemäßen verklebten Verbund einer bevorzugten Ausführungsform.

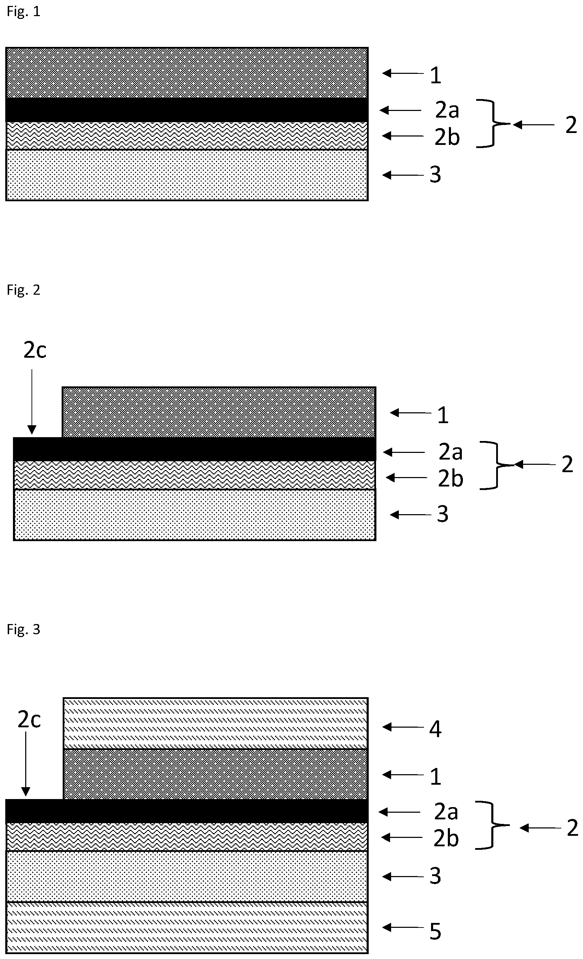

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet. Die Trägerschicht T umfasst eine Polymerfolie 2b, welche mit der Klebemasseschicht C 3 verbunden ist, und eine Metallbeschichtung 2a auf der Polymerfolie 2b, wobei die Metallbeschichtung 2a in Richtung der Klebemasseschicht D 1 angeordnet ist.

Wie in Fig. 1 ebenfalls erkennbar stellt der Schichtverbund ein doppelseitiges Klebeband dar, bei dem eine Fläche der Klebemasseschicht D und eine Fläche der zweiten Klebemasseschicht C jeweils zum Verkleben verfügbar sind.

In Fig. 2 ist eine bevorzugte Ausführungsform der Erfindung dargestellt. Hierbei überragt die elektrisch leitfähige Trägerschicht T 2 die Klebemasseschicht D 1 in wenigstens einer Erstreckungsrichtung der Schichtebene seitlich, sodass die elektrisch leitfähige Trägerschicht T 2 einen Überstand mit einer freien Fläche 2 c der Metallbeschichtung 2a aufweist. In Fig. 2 ist die zweite Klebemasseschicht C 3 so ausgebildet, dass sie die elektrisch leitfähige Trägerschicht T 2 an der der freien Fläche 2a gegenüberliegenden Fläche stützt und somit ebenfalls einen Überstand relativ zur Schicht D aufweist.

In Fig. 3 ist eine schematische Darstellung des erfindungsgemäßen verklebten Verbundes in einer bevorzugten Ausführungsform abgebildet. Wie anhand von Fig. 3 erkennbar, ist das Klebeband über die Klebemasseschicht D 1 auf einer Fläche des ersten Substrates A 4 angeordnet, wobei das erste Substrat wie ausgeführt elektrisch leitfähig ist.

Ferner ist das Klebeband über die zweite Klebemasseschicht C 3 auf einer Fläche eines zweiten Substrates B 5 angeordnet.

In Fig. 3 ist ebenfalls beispielhaft dargestellt, dass die elektrisch leitfähige Trägerschicht T 2 die erste Klebemasseschicht D 1 in wenigstens einer Erstreckungsrichtung der Schichtebene seitlich überragt, sodass die elektrisch leitfähige Trägerschicht T einen Überstand mit einer freien Fläche 2 c aufweist. In Fig. 3 ist die zweite Klebemasseschicht C 3 so ausgebildet, dass sie die elektrisch leitfähige Trägerschicht T 2 an der der freien Fläche 2a gegenüberliegenden Fläche stützt und somit ebenfalls einen Überstand relativ zur Schicht D aufweist.

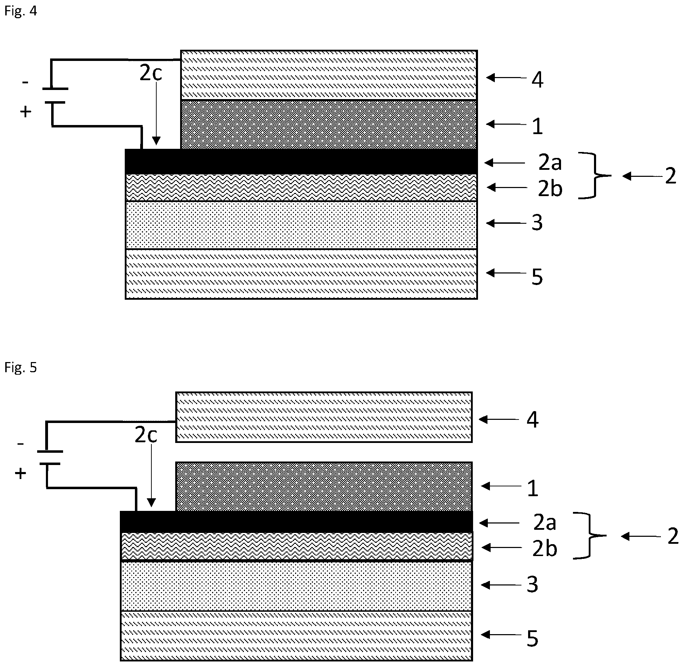

Über die freie Fläche 2c kann nun eine Spannung angelegt werden, wie in der schematischen Darstellung gemäß Fig. 4 gezeigt.

Durch das Anlegen der Spannung erfolgt eine Wanderung des Elektrolyten, insbesondere eine Trennung der Anionen und Kationen einer ionischen Flüssigkeit, in der Klebemasseschicht D 1.

Hierdurch wird die Adhäsion der Klebemasseschicht D 1 an das Substrat A 4 stark herabgesetzt und es erfolgt ein Lösen dieser Schichten voneinander, wie an der schematischen Darstellung gemäß Fig. 5 erkennbar.

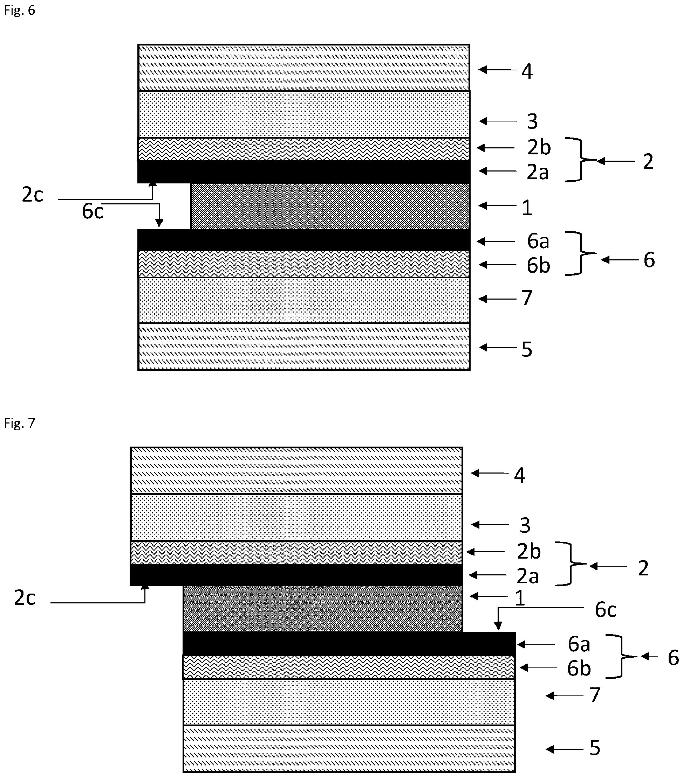

In Fig. 6 ist eine weitere schematische Darstellung des erfindungsgemäßen verklebten Verbundes in einer bevorzugten Ausführungsform abgebildet. Wie anhand von Fig. 6 erkennbar, ist das Klebeband über die Klebemasseschicht C 3 auf einer Fläche des ersten Substrates A 4 angeordnet.

Ferner ist das Klebeband über die dritte Klebemasseschicht C' 7 auf einer Fläche eines zweiten Substrates B 5 angeordnet.

Zwischen den Schichten C 3 und C' 7 befinden sich die elektrisch ablösbare Klebemasseschicht D 1 sowie zwei elektrisch leitfähige Trägerschichten T 2 und T' 6, wobei die Schicht D 1 zwischen den Trägerschichten angeordnet ist.

Die elektrisch leitfähige Trägerschicht T 2 umfasst eine Polymerfolie 2b, welche mit der Klebemasseschicht C 3 verbunden ist, und eine Metallbeschichtung 2a auf der Polymerfolie 2b, wobei die Metallbeschichtung 2a in Richtung der Klebemasseschicht D 1 angeordnet ist. Die elektrisch leitfähige Trägerschicht T' 6 umfasst eine Polymerfolie 6b, welche mit der Klebemasseschicht C' 7 verbunden ist, und eine Metallbeschichtung 6a auf der Polymerfolie 6b, wobei die Metallbeschichtung 6a in Richtung der Klebemasseschicht D 1 angeordnet ist.

In Fig. 6 ist ebenfalls beispielhaft dargestellt, dass die elektrisch leitfähige Trägerschicht T 2 sowie die elektrisch leitfähige Trägerschicht T' 6 die Klebemasseschicht D 1 jeweils in wenigstens einer Erstreckungsrichtung der Schichtebene seitlich überragen, sodass die elektrisch leitfähige Trägerschicht T einen Überstand mit einer freien Fläche 2c und die elektrisch leitfähige Trägerschicht T' einen Überstand mit einer freien Fläche 6c aufweist. Die zweite Klebemasseschicht C 3 ist so ausgebildet, dass sie die elektrisch leitfähige Trägerschicht T 2 an der der freien Fläche 2c gegenüberliegenden Fläche stützt und somit ebenfalls einen Überstand relativ zur Schicht D aufweist. Die dritte Klebemasseschicht C' 7 ist ebenfalls so ausgebildet, dass sie die elektrisch leitfähige Trägerschicht T' 6 an der der freien Fläche 6c gegenüberliegenden Fläche stützt und somit ebenfalls einen Überstand relativ zur Schicht D aufweist.

In Fig. 7 ist eine weitere schematische Darstellung des erfindungsgemäßen verklebten Verbundes in einer bevorzugten Ausführungsform abgebildet, welche der Darstellung gemäß

Fig. 6 ähnlich ist. Im Unterschied zu Fig. 6 zeigen die Überstände der elektrisch leitfähigen Trägerschicht T 2 und der elektrisch leitfähigen Trägerschicht T' 6 jedoch in unterschiedliche Richtungen, sodass die resultierenden freien Flächen dieser Schichten 2c bzw. 6c räumlich getrennt sind.

Das Anlegen der Spannung ist im Fall der räumlich getrennten Flächen 2c und 6c gemäß Fig. 7 vereinfacht.

Die Darstellungen in den Fig. 1 bis 7 sind wie ausgeführt rein schematische Darstellungen, um den Schichtaufbau und die Schichtenabfolge zu illustrieren. Insbesondere können die Schichtdicken der einzelnen Schichten voneinander abweichen. Etwaige Abweichungen der Schichtdicken zwischen den Figuren sind zeichnerisch bedingt haben keinerlei Aussage, sofern nichts anderes beschrieben ist.

Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen.

*Prüfmethoden*

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

*Molekulargewicht $M_n$, $M_w$*

Die Angaben des zahlenmittleren Molekulargewichts $M_n$ bzw. gewichtsmittleren Molekulargewichts $M_w$ in dieser Schrift beziehen sich auf die Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Å, 8,0 mm * 50 mm (Angaben hier und im Folgenden in der Reihenfolge: Typ, Partikelgrösse, Porosität, Innendurchmesser * Länge; 1 Å = $10^{-10}$ m) verwendet. Zur Auftrennung wird eine Kombination der Säulen des Typs PSS-SDV, 5 $\mu$m, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans gegen PMMA-Standards (Polymethylmethacrylat-Kalibrierung) und sonst gegen PS-Standards (Polystyrol-Kalibrierung).

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

*Dicke*

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Klebkraft*

180° Klebkrafttest:
Zum Testen der Klebkraft der elektrisch ablösbaren Schicht D auf Stahl: Ein 20 mm breiter Streifen eines erfindungsgemäßen Klebebands wird mit der Seite der Klebemasseschicht C auf eine 23 $\mu$m dicke PET-Folie geklebt.

Der Verbund wird mit der elektrisch ablösbaren Seite (Schicht D) auf eine Stahlplatte aufgebracht, die zuvor zweimal mit Aceton und einmal mit Isopropanol gewaschen wurde. Der Klebestreifen wird zweimal mit einem Anpressdruck entsprechend einem Gewicht von 2 kg auf das Substrat aufgedrückt. Das Klebeband wird anschließend sofort mit einer Geschwindigkeit von 300 mm/min und in einem Winkel von 180° vom Substrat abgezogen. Alle Messungen werden bei Raumtemperatur durchgeführt.

Die Messergebnisse sind in N/cm angegeben und sind gemittelt aus drei Messungen.

Für die Messung der Klebkraft nach Anlegen einer Spannung wird das Klebeband wie oben beschrieben auf die Stahlplatte geklebt. Es wird eine Gleichspannung von 12 V angelegt, und zwar so, dass der Minuspol an die Stahlplatte gelegt wird und der Pluspol an den Überstand der metallisierten Polymerfolie bzw. genauer: an die freie Fläche der Metallbeschichtung gelegt wird.

Nach 60 s wird die Spannung abgeschaltet und die Probe sofort in die Messapparatur gespannt und die Klebkraft gemessen.

Zum Testen der Klebkraft der Schicht C auf Stahl: Die Messungen werden analog durchgeführt, wobei zunächst ein 20 mm breiter Streifen eines erfindungsgemäßen Klebebands mit der elektrisch ablösbaren Klebmasseseite (Schicht D) auf eine 23 $\mu$m dicke PET-Folie geklebt wird und anschließend der Verbund mit der anderen Seite (Schicht C) auf eine Stahlplatte aufgebracht wird, usw.

*Optische Dichte (OD)*

Die Optische Dichte OD ist ein Maß für die Schwächung, die das Licht beim Durchtritt durch Materie erfährt. Beträgt die Beleuchtungsstärke vor dem Durchtritt $E_0$ und danach E, so heißt $\tau = E/E_0$ Transparenz und $1/\tau = E_0/E$ Opazität. Die OD ist der dekadische Logarithmus der Opazität. OD 1 bedeutet dann Schwächung auf ein Zehntel, OD 2 auf ein Hundertstel der ursprünglichen Beleuchtungsstärke.

Die optisch Dichte wird mit einem Densitometer der Firma Heiland electronic bestimmt.

*Optische Defekte*

Proben der Beispiele werden unter feucht-warmen Bedingungen gelagert, hier bei einer Temperatur von 60 °C und einer Feuchtigkeit von 95 % für 7 Tage, und anschließend auf optische Defekte, insbesondere solche, die von einer Korrosion herrühren könnten, untersucht.

**Erfindungsgemäßes Beispiel 1**

Die Klebemasseschicht D wird folgendermaßen bereitgestellt:

Ein Basispolymer auf Basis von Acrylaten wird folgendermaßen hergestellt: Ein für radikalische Polymerisationen konventioneller Reaktor wird mit 48 kg 2-Ethylhexylacrylat, 48 kg n-Butylacrylat, 4 kg Acrylsäure und 66 kg Benzin/Aceton (70/30) befüllt. Nach 45-minütiger Durchleitung von Stickstoffgas unter Rühren wird der Reaktor auf 58 °C hochgeheizt und 50 g AIBN hinzugegeben. Anschließend wird das äußere Heizbad auf 75 °C erwärmt und die Reaktion konstant bei dieser Außentemperatur durchgeführt. Nach 1 h werden erneut 50 g AIBN zugegeben und nach 4 h wird mit 20 kg Benzin/Aceton Gemisch verdünnt. Nach 5,5 sowie nach 7 h wird jeweils mit 150 g Bis-(4-tert-butylcyclohexyl)peroxydicarbonat nachinitiiert. Nach 22 h Reaktionszeit wird die Polymerisation abgebrochen und auf Raumtemperatur abgekühlt. Das Polyacrylat hat ein mittleres Molekulargewicht von Mw = 386.000 g/mol, mit einer Polydispersität PD (Mw/Mn) =3,6
Zu 100 Gew.-% bezogen auf die Menge des Polymers ohne Lösemittel werden 5,5 Gew.-% der ionischen Flüssigkeit 1-Ethyl-3-methylimidazolium-bis(trifluormethylsulfonyl)imid (EMIM-TFSI) versetzt.

Zusätzlich werden 0,1 Gew.-% bezogen auf die Menge des Acrylat-Polymers ohne Lösemittel von dem Vernetzer Erysis GA 240 (Tetraglycidyl-meta-Xylenediamin) zugegeben.
Die erhaltene Mischung wird dann mit einem Streichbalken auf einen PET-Liner, ausgerüstet mit einem trennenden Silikon, ausgestrichen, so dass nach Trocknen bei 110°C eine Schichtdicke von 50 μm entsteht.
Die Klebemasseschicht C wird folgendermaßen bereitgestellt:
Das Acrylat-Basispolymer wird wie oben für die Klebemasseschicht D beschrieben hergestellt. Es werden 0,1 Gew.-% bezogen auf die Menge des Acrylat-Polymers ohne Lösemittel von dem Vernetzer Erysis GA 240 zugegeben.
Auch diese Klebmasse wird auf einen PET-Liner, ausgerüstet mit einem trennenden Silikon, ausgestrichen. Nach Trocknung bei 110°C beträgt auch hier die Schichtdicke 50μm.
Als Trägerschicht T dient eine 23 μm dicke PET-Folie, die auf einer Fläche mit Zinn (98 bis 100 Gew.-% Zinn) bedampft ist und somit eine Polymerseite und eine metallisierte Seite aufweist. Nach der Bedampfung hat die Folie eine optische Dichte von 2,3.
Anschließend wird die Trägerschicht auf die Klebmasse C laminiert, wobei die Polymerseite der Trägerschicht T zur Klebemasseschicht C zeigt.
Dieser Verbund wird dann anschließend mit der Metallseite des Verbundes auf die Klebmasse D laminiert, sodass die Metallschicht (98 bis 100 Gew.-% Zinn) inklusive der Klebmasseschicht C die Klebmasseschicht D in mindestens einer Richtung überragt, am besten mit mindestens 1cm. Die Dicke des Verbundes beträgt 123 μm.
Die Klebkraft des Verbundes auf Stahl wird gemäß oben beschriebener Methode gemessen. Auf der elektrisch ablösbaren Seite, also auf der freien Fläche der Klebemasseschicht D, beträgt sie 4,5 N/cm, und auf der Klebmasseschicht C 6,4 N/cm.
Die Ablösekraft wird nach Anlegen einer Spannung von 12 V für 1 min gemessen, wie oben angegeben.
Anschließend wird erneut die Klebkraft des Klebebandes auf der Stahlplatte gemessen. Die Klebkraft beträgt jetzt nur noch 0,2 N/cm.
Durch das Anlegen der Spannung konnte die Klebkraft deutlich reduziert werden.
Anschließend wird eine weitere Probe des Klebebands inklusive der Liner bei einer Temperatur von 60 °C und einer Feuchtigkeit von 95 % für 7 Tage gelagert.
Nach dem Entfernen aus dem Feuchteschrank wird das Klebeband für 2 h bei 23°C und 50 % Luftfeuchtigkeit konditioniert. Danach wird das Tape optisch auf Defekte untersucht und sowohl die Klebkraft als auch die Ablösekraft erneut gemessen wie oben beschrieben.
Es können keine Defekte, weder eine flächige Transparenz der Muster, noch vereinzelte kleine metallfreie Punkte erkannt werden.
Die Klebkraft auf der ablösbaren Seite beträgt 4,7 N/cm.
Die Ablösekraft nach Anlegen der Spannung beträgt 0,2 N/cm.

**Erfindungsgemäßes Beispiel 2**

Das erfindungsgemäße Beispiel 2 entspricht Beispiel 1 mit dem Unterschied, dass eine Folie mit einer Metallisierung aus Chrom (98 bis 100 Gew.-% Chrom) anstelle von Zinn eingesetzt wird.

**Erfindungsgemäßes Beispiel 3**

Das erfindungsgemäße Beispiel 3 entspricht Beispiel 1 mit dem Unterschied, dass eine Folie mit einer Metallisierung aus Nickel (98 bis 100 Gew.-% Nickel) anstelle von Zinn eingesetzt wird.

**Erfindungsgemäßes Beispiel 4**

Das erfindungsgemäße Beispiel 4 entspricht Beispiel 1 mit dem Unterschied, dass eine Folie mit einer Metallisierung aus Titan (98 bis 100 Gew.-% Titan) anstelle von Zinn eingesetzt wird.

**Erfindungsgemäßes Beispiel 5**

Das erfindungsgemäße Beispiel 5 entspricht Beispiel 1 mit dem Unterschied, dass eine Folie mit einer Metallisierung aus Stahl (88% Eisen mit 12% Chrom) anstelle von Zinn eingesetzt wird.

**Vergleichsbeispiel V1**

Das Vergleichsbeispiel 1 entspricht Beispiel 1 mit dem Unterschied, dass eine Folie mit einer Metallisierung aus Aluminium (98 bis 100 Gew.-% Aluminium) anstelle von Zinn eingesetzt wird.

**Vergleichsbeispiel V2**

Das Vergleichsbeispiel 2 entspricht Beispiel 1 mit dem Unterschied, dass eine Folie mit einer Metallisierung aus Kupfer (98 bis 100 Gew.-% Kupfer) eingesetzt wird.

**Vergleichsbeispiel V3**

Das Vergleichsbeispiel 3 entspricht Beispiel 1 mit dem Unterschied, dass eine Folie mit einer Metallisierung aus Silber (98 bis 100 Gew.-% Silber) eingesetzt wird.

Die Ergebnisse der erfindungsgemäßen Beispiele und der Vergleichsbeispiele sind in Tabelle 1 zusammengefasst.

Tabelle 1

| Beispiel | OD | Klebkraft RT [N/cm] | Klebkraft nach Lagerung [N/cm] | Ablösekraft RT [N/cm] | Ablösekraft nach Lagerung [N/cm] | Optische Defekte |
|---|---|---|---|---|---|---|
| 1 | 2,3 | 4,8 | 4,7 | 0,2 | 0,2 | Keine |
| 2 | 2,8 | 4,5 | 4,5 | 0,3 | 0,2 | Keine |
| 3 | 2,6 | 4,7 | 4,6 | 0,2 | 0,2 | Keine |
| 4 | 2,0 | 4,9 | 4,7 | 0,3 | 0,3 | Keine |
| 5 | 2,0 | 4,6 | 4,8 | 0,2 | 0,3 | keine |
| V1 | 2,2 | 4,4 | 4,6 | 0,2 | 0,4 | Viele transparente Punkte |
| V2 | 2,5 | 4,6 | 4,7 | 0,2 | 1,2 | Starke Korrosion |
| V3 | 2,2 | 4,7 | 4,6 | 0,1 | 0,8 | Material wird transparenter und zeigt viele Fehlstellen |

Die Beispiele zeigen, dass vor dem Anlegen einer Spannung eine hohe Klebkraft auf Stahl erzielt wird. Dies gilt auch für Proben, die unter feucht-warmen Bedingungen gelagert wurden. Durch das Anlegen einer Spannung konnte die Klebkraft bei allen erfindungsgemäßen Beispielen so weit reduziert werden, dass sich die Substrate ohne großen Kraftaufwand voneinander lösen lassen.

Dabei konnte insbesondere die Klebemasseschicht D rückstandsfrei vom jeweiligen Substrat abgelöst werden.

Wie anhand von Tabelle 1 erkennbar, gelingt es aber nur mit den erfindungsgemäßen Beispielen, bei denen das Metall der Metallbeschichtung der Polymerfolie ausgewählt ist aus der Gruppe bestehend aus Zinn, Chrom, Nickel, Titan und Eisen, dass die Klebebänder auch nach der Lagerung unter feucht-warmen Bedingungen keine optischen Defekte und somit keine Anzeichen von Korrosion aufweisen.

Bezugszeichenliste

1       Klebemasseschicht D
2       elektrisch leitfähige Trägerschicht T
2a      Metallbeschichtung der elektrisch leitfähigen Trägerschicht T
2b      Polymerfolie der elektrisch leitfähigen Trägerschicht T
2c      freie Fläche der elektrisch leitfähigen Trägerschicht
3       zweite Klebemasseschicht C
4       erstes Substrat A
5       zweites Substrat B
6       zweite elektrisch leitfähige Trägerschicht T'
6a      Metallbeschichtung der elektrisch leitfähigen Trägerschicht T'
6b      Polymerfolie der elektrisch leitfähigen Trägerschicht T'
6c      freie Fläche der elektrisch leitfähigen Trägerschicht T'
7       dritte Klebemasseschicht C'

**Patentansprüche**

1.  Klebeband, umfassend wenigstens folgende Schichten:

    • Eine erste Klebemasseschicht D, wobei die Klebemasseschicht D wenigstens ein Elektrolyt enthält; und
    • Eine zweite Klebemasseschicht C; und
    • Eine elektrisch leitfähige Trägerschicht T, die zwischen den Schichten D und C angeordnet ist, wobei die elektrisch leitfähige Trägerschicht eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-%, bevorzugt zu mindestens 80 Gew.-%, besonders bevorzugt zu mindestens 90 Gew.-%, ausgewählt ist aus der Gruppe bestehend aus Zinn, Chrom, Nickel, Titan und Eisen.

2.  Klebeband nach Anspruch 1, **dadurch gekennzeichnet, dass** der Elektrolyt der Klebemasseschicht D ausgewählt ist aus der Gruppe bestehend aus ionischen Flüssigkeiten und Metallsalzen, wobei ionische Flüssigkeiten besonders bevorzugt sind.

3.  Klebeband nach Anspruch 2, **dadurch gekennzeichnet, dass** das Anion der ionischen Flüssigkeit ausgewählt ist aus der Gruppe bestehend aus
    $Br^-$, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF_2)_3SO_3^-$, $(CF_3CF_2SO_2)_2N^-$, $CF_3CF_2CF_2COO^-$, $(FSO_2)_2N^-$, und dabei besonders bevorzugt ausgewählt ist aus $(CF_3SO_2)_2N^-$, $(FSO_2)_2N^-$ und $PF_6^-$.

4.  Klebeband nach Anspruch 2 oder 3, **dadurch gekennzeichnet, dass** das Kation der ionischen Flüssigkeit ausgewählt ist aus der Gruppe bestehend aus Kationen auf Imidazolium-Basis, Kationen auf Pyridinium-Basis, Kationen auf Pyrrolidin-Basis und Kationen auf Ammonium-Basis, und dabei besonders bevorzugt ausgewählt ist aus der Gruppe bestehend aus Kationen auf Imidazolium-Basis, wobei das Kation besonders bevorzugt ausgewählt ist aus der Gruppe bestehend aus 1-Ethyl-3-methylimidazolium und 1-Butyl-3-methylimidazolium, wobei das Kation ganz besonders bevorzugt 1-Ethyl-3-methylimidazolium ist.

5.  Klebeband nach einem der vorherigen Ansprüche, **dadurch gekennzeichnet, dass** der Elektrolyt der Klebemasseschicht D ausgewählt ist aus der Gruppe bestehend aus den ionischen Flüssigkeiten 1-Ethyl-3-methylimidazolium-bis(trifluormethylsulfonyl)imid (EMIM-TFSI), 1-Ethyl-3-methylimidazolium bis(fluorsulfonyl)imid (EMIM-FSI), 1-Ethyl-3-methylimidazolium-hexafluorophosphat, und 1-Butyl-3-methylimidazolium-hexafluorophosphat.

6.  Klebeband nach einem der vorhergehenden Ansprüche, **dadurch gekennzeichnet, dass** die erste Klebemasseschicht D poly(meth)acrylat-basiert ist.

**7.** Klebeband nach einem der vorhergehenden Ansprüche, **dadurch gekennzeichnet, dass** die erste Klebemasseschicht D 2 bis 10 Gew.-%, bevorzugt 4 bis 8 Gew.-%, an Elektrolyten, bevorzugt ionischen Flüssigkeiten, bezogen auf 100 Gew.-% an enthaltenen Polymeren enthält.

**8.** Klebeband nach einem der vorhergehenden Ansprüche, **dadurch gekennzeichnet, dass** das Polymer der Polymerfolie ausgewählt ist aus der Gruppe bestehend aus Polyestern, Polyethylen, Polypropylen, Polyolefinen oder Polyurethanen, wobei eine Polymerfolie aus Polyester besonders bevorzugt ist, insbesondere auf Basis von Polyethylenterephthalat (PET) oder Polybutylenterephthalat, wobei Polyethylenterephthalat wiederum bevorzugt ist.

**9.** Klebeband nach einem der Ansprüche 1 bis 8, **dadurch gekennzeichnet, dass** es wenigstens die folgenden Schichten umfasst:

• Eine erste Klebemasseschicht D, wobei die Klebemasseschicht D wenigstens ein Elektrolyt enthält; und
• Eine zweite Klebemasseschicht C; und
• Eine erste elektrisch leitfähige Trägerschicht T, die zwischen den Schichten D und C angeordnet ist, wobei die elektrisch leitfähige Trägerschicht eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-%, bevorzugt zu mindestens 80 Gew.-%, besonders bevorzugt zu mindestens 90 Gew.-%, ausgewählt ist aus der Gruppe bestehend aus Zinn, Chrom, Nickel, Titan und Eisen; und
• Wenigstens eine zweite elektrisch leitfähige Trägerschicht T', die auf der der Trägerschicht T gegenüberliegenden Oberfläche der Klebemasseschicht D angeordnet ist, wobei die zweite elektrisch leitfähige Trägerschicht T' ebenfalls eine Polymerfolie umfasst, wobei die Polymerfolie an der Oberfläche, die in Richtung der Schicht D ausgerichtet ist, eine Metallbeschichtung aufweist, wobei das Metall der Metallbeschichtung zu mindestens 70 Gew.-%, bevorzugt zu mindestens 80 Gew.-%, besonders bevorzugt zu mindestens 90 Gew.-%, ausgewählt ist aus der Gruppe bestehend aus Zinn, Chrom, Nickel, Titan und Eisen; und
• Eine dritte Klebemasseschicht C', die auf der der ersten Klebemasseschicht D gegenüberliegenden Oberfläche der zweiten Trägerschicht T' angeordnet ist.

**10.** Verklebter Verbund umfassend wenigstens folgende Schichten:

• Ein erstes Substrat A; und
• Ein zweites Substrat B; und
• Ein Klebeband nach einem der Ansprüche 1 bis 9, welches zwischen dem Substrat A und dem Substrat B angeordnet ist und die Substrate A und B miteinander verklebt.

**11.** Verfahren zum elektrischen Lösen des Verbundes nach Anspruch 10, umfassend wenigstens folgende Verfahrensschritte:

i.) Anlegen einer Spannung an zwei verschiedenen Stellen des Verbundes, wobei die Spannung bevorzugt von 2 bis 50 V beträgt.

**12.** Verwendung des Klebebands gemäß einem der Ansprüche 1 bis 9 zur Verklebung von Bauteilen in elektronischen Geräten, Automobilen, medizinischen Geräten und zahnmedizinischen Geräten.

Fig. 1

Fig. 2

Fig. 3

Fig. 4

Fig. 5

Fig. 6

← 4

← 3

← 2b ⎫
← 2a ⎬ ← 2
     ⎭

2c —→
6c —→

← 1

← 6a ⎫
← 6b ⎬ ← 6
     ⎭

← 7

← 5

Fig. 7

← 4

← 3

← 2b ⎫
← 2a ⎬ ← 2
     ⎭

2c —→

← 1

6c

← 6a ⎫
← 6b ⎬ ← 6
     ⎭

← 7

← 5

Europäisches Patentamt

European Patent Office

Office européen des brevets

# EUROPÄISCHER RECHERCHENBERICHT

**Nummer der Anmeldung**

EP 24 15 4545

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 848 434 A1 (NITTO DENKO CORP [JP]) 14. Juli 2021 (2021-07-14) * Zusammenfassung * * Absätze [0007], [0038] - Absatz [0043] * * Absatz [0086] - Absatz [0095] * * Absatz [0153] - Absätze [0158], [0190]; Ansprüche 1,2,6-10 * ----- | 1-8, 10-12 | INV. C09J5/00 C09J7/22 C09J7/29 C09J7/30 |
| X | EP 3 363 875 A1 (NITTO DENKO CORP [JP]) 22. August 2018 (2018-08-22) * Zusammenfassung * * Absatz [0066] - Absatz [0076] * * Appendix 20; Absatz [0091] - Absätze [0092], [0124]; Ansprüche 1,2,4,10 * ----- | 1-8, 10-12 | |
| X,D | EP 3 363 873 B1 (NITTO DENKO CORP [JP]) 29. Dezember 2021 (2021-12-29) * Zusammenfassung * * Absätze [0007], [0012], [0030], [0032], [0036], [0037], [0048] - Absätze [0056], [0061], [0087]; Ansprüche 1-4,7-11; Abbildungen 1,8 * ----- | 1-12 | **RECHERCHIERTE SACHGEBIETE (IPC)** C09J C08K |

Der vorliegende Recherchenbericht wurde für alle Patentansprüche erstellt

| Recherchenort | Abschlußdatum der Recherche | Prüfer |
|---|---|---|
| München | 1. Juli 2024 | Meier, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 15 4545

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2024

| Im Recherchenbericht angeführtes Patentdokument | Datum der Veröffentlichung | Mitglied(er) der Patentfamilie | Datum der Veröffentlichung |
|---|---|---|---|
| EP 3848434 A1 | 14-07-2021 | CN 112639045 A | 09-04-2021 |
| | | EP 3848434 A1 | 14-07-2021 |
| | | JP 2020164778 A | 08-10-2020 |
| | | KR 20210053896 A | 12-05-2021 |
| | | US 2021277286 A1 | 09-09-2021 |
| EP 3363875 A1 | 22-08-2018 | CN 108138026 A | 08-06-2018 |
| | | CN 109294491 A | 01-02-2019 |
| | | CN 116656256 A | 29-08-2023 |
| | | CN 116656279 A | 29-08-2023 |
| | | EP 3363875 A1 | 22-08-2018 |
| | | EP 3456792 A1 | 20-03-2019 |
| | | JP 6974170 B2 | 01-12-2021 |
| | | JP 7284226 B2 | 30-05-2023 |
| | | JP 2022000507 A | 04-01-2022 |
| | | JP WO2017064918 A1 | 23-08-2018 |
| | | KR 20180074538 A | 03-07-2018 |
| | | KR 20180110209 A | 08-10-2018 |
| | | US 2018305593 A1 | 25-10-2018 |
| | | US 2019031929 A1 | 31-01-2019 |
| | | US 2022177734 A1 | 09-06-2022 |
| | | WO 2017064918 A1 | 20-04-2017 |
| EP 3363873 B1 | 29-12-2021 | CN 108138002 A | 08-06-2018 |
| | | EP 3363873 A1 | 22-08-2018 |
| | | JP 6947635 B2 | 13-10-2021 |
| | | JP WO2017064925 A1 | 16-08-2018 |
| | | KR 20180078105 A | 09-07-2018 |
| | | US 2018265750 A1 | 20-09-2018 |
| | | WO 2017064925 A1 | 20-04-2017 |

Für nähere Einzelheiten zu diesem Anhang : siehe Amtsblatt des Europäischen Patentamts, Nr. 12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 3363873 B1

### In der Beschreibung aufgeführte Nicht-Patentliteratur

- **CARL H. HAMANN** ; **WOLF VIELSTICH**. Elektrochemie I: Elektrolytische Leitfähigkeit. VCH Verlagsgesellschaft mbH, 1985, 4

- **P. E. HINKAMP**. *Polymer*, 1967, vol. 8, 381